# EUROPÄISCHE PATENTSCHRIFT

(11) **EP 0 673 946 B1**
(45) Veröffentlichungstag und Bekanntmachung des Hinweises auf die Patenterteilung: **27.06.2001**
(21) Anmeldenummer: 95103708.4
(22) Anmeldetag: 15.03.1995
(51) Int. Cl.: C07F 17/00, C08F 10/00, C07F 17/02

(54) **Metallocene und deren Einsatz für die Olefinpolymerisation**
Metallocenes and their use in polymerization of olefins
Metallocènes et leur application dans le polymérisation d'oléfines

(30) Priorität: 22.03.1994 AT 59494
(43) Veröffentlichungstag der Anmeldung: 27.09.1995
(73) Patentinhaber: Borealis Technology Oy, 06101 Porvoo (FI)
(72) Erfinder: Schottenberger, Herwig, Mag. Dr., A-5020 Salzburg (AT); Reussner, Jens, Dr., A-4050 Traun (AT); Buchmeiser, Michael, Mag. Dr., A-4150 Rohrbach (AT); Neissl, Wolfgang, Dipl.-Ing. Dr., A-4040 Lichtenberg (AT); Elsner, Olaf, Mag., D-33332 Gütersloh (DE); Angleitner, Herbert, Mag., A-5242 St. Johann (AT); Ernst, Eberhard, Dr., A-4223 Katsdorf (AT)
(74) Vertreter: Marsden, John Christopher

(56) Entgegenhaltungen:
- EP-A- 0 485 823
- EP-A- 0 576 970
- EP-A- 0 582 194
- US-A- 5 096 867
- J. AM. CHEM. SOC. (JACSAT,00027863);88; VOL.110 (19); PP.6596-8, COM. CHIL. ENERG. NUCL.;SANTIAGO; CHILE (CL), XP002028052 BUNEL E E ET AL: "Bis[(pentamethylcyclopentadienyl)metal]pe ntalenes. A new class of highly delocalized, fused metallocenes"
- MACROMOLECULES (MAMOBX,00249297);95; VOL.28 (21); PP.7095-9, JOHANNES KEPLER UNIVERSITY;INSTITUT FUER CHEMIE; LINZ; A-4040; AUSTRIA (AT), XP000647653 JERSCHOW A ET AL: "Nuclear Magnetic Resonance Evidence for a New Microstructure in Ethene-Cyclopentene Copolymers"

## Beschreibung

Die Erfindung betrifft neue Metallocene und deren Einsatz als Katalysatoren bei der Olefinpolymerisation.

Metallocene der Metalle der IV. Nebengruppe des Periodensystems sind hochaktive Katalysatoren für die Polymerisation von Olefinen. Die resultierenden Polyolefine besitzen neue Eigenschaftskombinationen und ergänzen das Produktspektrum der bisher mit bekannten konventionellen Ziegler-Natta-Katalysatoren hergestellten Polyolefine.
Es ist bekannt, daß Katalysatoren auf der Basis unverbrückter, substituierter und unsubstituierter Biscyclopentadienyl-Metallocene im Zusammenwirken mit Aluminoxanen als Cokatalysator für die Herstellung von Polyethylen und Ethylen/α-Olefin-Copolymere genutzt werden können (EXXON EP 128046).
Desweiteren ist bekannt, daß mit verbrückten, chiralen Metallocenen stereoreguläre Polyolefine darstellbar sind. Für eine Verbrückung der Ligandensysteme werden hauptsächlich Dimethylsilylen-Gruppen (CHISSO EP 316155), Ethylen-Gruppen (Brintzinger et al, J. Organomet. Chem., 288 (1985) 63-67) und Isopropyliden-Brükken (Mitsui Toatsu EP 459264) verwendet. In Abhängigkeit vom Ligandentyp und den Substituenten können isotaktische, syndiotaktische, hemiisotaktische, isoblockartige und ataktische Homo-und Copolymere mit aliphatischen oder cyclischen Strukturen dargestellt werden.
Als Liganden werden bevorzugt substituierte und unsubstituierte Cyclopentadienyl-Einheiten (CHISSO 316155), substituierte und unsubstituierte Indenyl-Einheiten (Hoechst EP 302424; EP 336128; Hoechst EP 485 823) eingesetzt. In EP-A-485823 sind 2-substituierte Bisindenylmetallocene, beispielsweise rac-Dimethylsilyl-(2-methyl-indenyl)2 zirkondichlorid, zur Propylenpolymerisation beschrieben. Weitere mögliche Liganden sind substituierte und unsubstituierte Cyclopentadienyl-Einheiten in Kombination mit unsubstituierten Fluorenyl-Gruppen (Mitsui Toatsu EP 412416).
Ebenso bekannt ist, daß zur Polymerisation von Olefinen auch verbrückte Metallocene mit einem Cyclopentadienyl-System und einem Heteroatomliganden ("constrained geometry catalyst") eingesetzt werden können (EXXON US 5096867).
Von diesen verschiedenen Metallocentypen erlangten die verbrückten, chiralen, substituierten Bisindenylsysteme eine besondere Bedeutung. So konnte nachgewiesen werden, daß die Art der Substituenten und die Stellung der Substituenten am Liganden des Metallocens einen wesentlichen Einfluß auf die Reaktivität des Katalysatorsystems und den stereoregulären Aufbau der erhaltenen Polyolefine ausübt. Besonders zwei Substitutionsmöglichkeiten erwiesen sich als vorteilhaft. Die erste Möglichkeit geht von einer Substitution am Indenylring in 2, 4 und/oder 6 Position aus (Hoechst EP 485823; Angew. Chem., 10 (1992) 1373; Spaleck et al, MetCon 93 Houston), die zweite Möglichkeit beschreibt die Anellierung am Benzolring des Indenylliganden mit höher kondensierten aromatischen Kohlenwasserstoffen (Kaminsky, Polypropylene 93 Zürich). Beide Katalysatortypen können für die Darstellung isotaktischer Polypropylene und Ethylen/alpha-Olefin-Copolymere eingesetzt werden.

Es bestand somit die Aufgabe, weitere Strukturvarianten von Metallocenen als Katalysatoren zur Polymerisation von Olefinen zu finden.
Überraschenderweise wurde nun gefunden, daß ferrocen- oder ruthenocen substituierte Metallocensysteme geeignete Katalysatoren für die Herstellung von Polyolefinen sind.

Gegenstand der vorliegenden Erfindung sind demnach Metallocene der Formel I 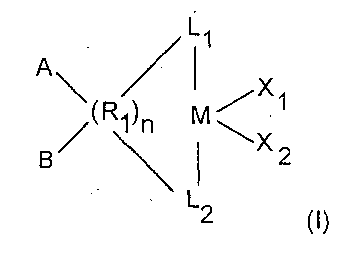 worin
M ein Metall der Gruppe Ti, Zr, Hf, V, Nb, Ta oder ein Element aus der Gruppe der Lanthaniden ist,
X₁ und X₂ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀-Alkenylgruppe, eine C₇ - C₂₀- Arylalkylgruppe, eine C₇ - C₂₀- Alkylarylgruppe, eine C₈ - C₂₀- Arylalkenylgruppe, Wasserstoff oder ein Halogenatom bedeuten,
L₁ und L₂
   a) gleich oder verschieden sind und einen gegebenenfalls ein- oder mehrfach substituierten ein- oder mehrkernigen Kohlenwasserstoffrest mit wenigstens einer Cyclopentadienyl- Einheit bedeuten, welcher mit M eine Sandwichstruktur bilden kann, wobei L₁ und / oder L₂ mit einem oder mehreren substituierten oder unsubstituierten Ferrocen- bzw. Ruthenocenresten substituiert und/oder kondensiert ist, wobei die Substituenten die gleiche Bedeutung wie X₁ und X₂ haben können oder einen Ferrocen- oder Ruthenocenrest darstellen, oder
   b) L₁ einen gegebenenfalls ein- oder mehrfach substituierten ein- oder mehrkernigen Kohlenwasserstoffrest mit wenigstens einer Cyclopentadienyl-Einheit bedeutet, welcher mit M eine Sandwichstruktur bilden kann und der mit einem oder mehreren substituierten oder unsubstituierten Ferrocen- bzw. Ruthenocenresten substituiert und/oder kondensiert ist, wobei die Substituenten die gleiche Bedeutung wie X₁ und X₂ haben oder einen Ferrocen- oder Ruthenocenrest darstellen und L₂ ein Amido-, Phosphido- oder Arsenidorest der Formel

      E―D<

      ist, in der D Stickstoff, Phosphor oder Arsen bedeuten und E die Bedeutung von X₁ und X₂ hat,
R₁ Kohlenstoff, Silizium, Germanium und Zinn, oder das gesamte Brückenglied A(R₁)ₙB ein unsubstituierter oder mit A und/oder B substituierter Biphenylen-Rest sein kann,
A und B die Bedeutung von X₁ und X₂ haben und
n im Falle von Kohlenstoff für eine ganze Zahl von 0 bis 4 und im Falle von Silizium, Germanium und Zinn für 0 oder 1 steht, wobei für den Fall, daß n = 0 ist, die freien Valenzen an L₁ und L₂ durch einen Rest X₁ oder X₂ substituiert sind, mit der Auflage, daß für den Fall, daß L₂ einen Amido-, Phosphido- oder Arsenidorest darstellt, n ungleich Null ist.

Besonders bevorzugt als Reste L₁ und L₂ sind Ferroceno[2,3]inden-1-yl, Ferro ceno[2,3]cyclopentadien-1-yl, 4-Ferrocenylferroceno[2,3]cyclopentadien-1-yl, oder 9-Ferrocenylfluorenyl, bzw. als Reste L₂ zusätzlich Cyclopentadienyl, Tetramethyl - cyclopentadienyl, Inden-1-yl, 2-Methylinden-1-yl, Fluorenyl.

Gemäß Erfindung sind die folgenden Metallocene besonders bevorzugt:
Bis(ferroceno[2,3]inden-1-yl)dimethylsilylenzirkoniumdichlorid,rac-(Ferroceno [2,3]inden-1-yl)dimethylsilylen(tetramethylcyclopentadienyl)zirkoniumdichlorid, rac-(Ferroceno[2,3]inden-1-yl)dimethylsilylen(cyclopentadienyl)zirkoniumdichlorid, rac-(Ferroceno[2,3]inden-1-yl)dimethylsilylen(2-methylinden-1-yl)hafniumdichlorid, rac-(Ferroceno[2,3]inden-1-yl)dimethylsilylen(fluoren-9-yl)zirkoniumdichlorid, rac-(Ferroceno[2,3]inden-1-yl)dimethylsilylen(t-butylamido)zirkoniumdichlorid, rac-(4-Ferrocenylferroceno[2,3]cyclopentadienyl)dimethylsilylen(tetramethylcyclopentadienyl)zirkoniumdichlorid, Bis(4-ferrocenylferroceno[2,3]cyclopentadienyl)dimethylsilylenzirkoniumdichlorid und Bis(9-ferrocenylfluorenyl)titaniumdichlorid.

Ein weiterer Gegenstand der Erfindung ist ein Verfahren zur Herstellung der Metallocene gemäß Formel I, das dadurch gekennzeichnet ist, daß man eine Verbindung der Formel II 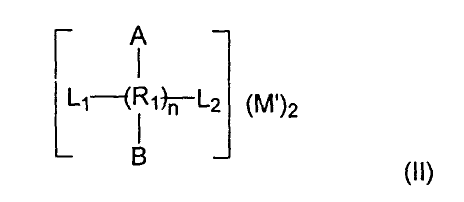 mit einer Verbindung der Formel III

M(X')₂ X₁ X₂ (III)

umsetzt, wobei L₁, L₂, A, B, R₁ bzw. das Brückenglied A(R₁)ₙB, M, X₁, X₂ und n die oben angeführte Bedeutung haben, M' ein Alkali- oder Erdalkalimetall und X' ein Halogenatom bedeuten. Besonders bevorzugt als M' ist Lithium, als X' Chlor.

Die Metallocene der Formel I können beispielsweise nach folgendem Reaktionsschema hergestellt werden: 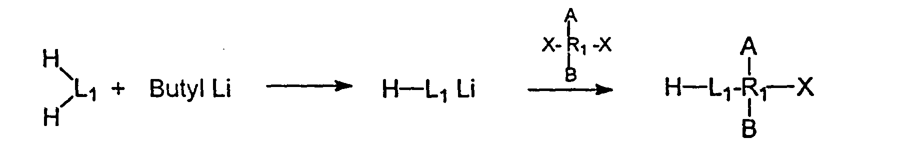 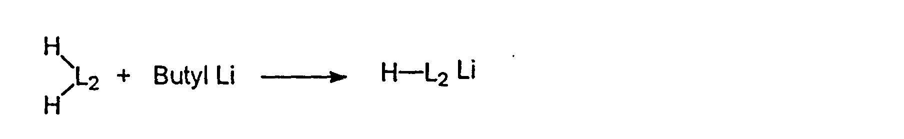 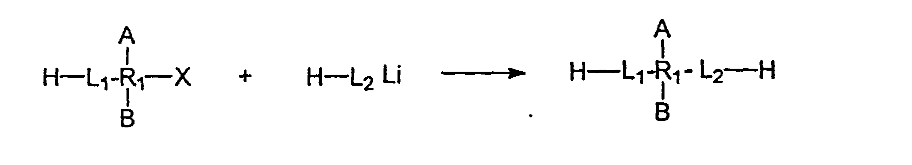 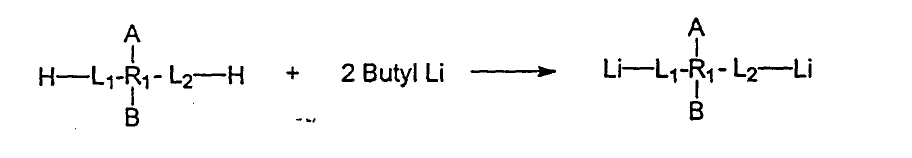 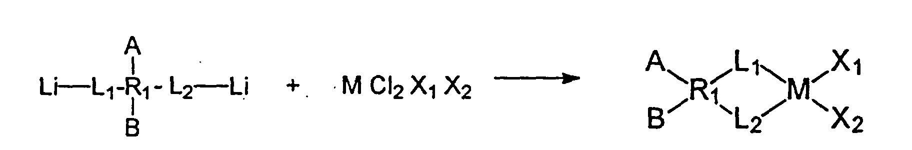 X = F; Cl; Br; I
X₁/X₂; L₁ und L₂ haben die oben genannte Bedeutung.

Verfahren zur Herstellung der Metallocene werden in den Ausführungsbeispielen beispielhaft angeführt.
Als Liganden L₁ oder L₂ sind beispielsweise solche aus den im folgenden angeführten Gruppen möglich:
a) Ferroceno[1,2]cyclopenta-1,3-dien bzw. Ruthenoceno[1,2]cyclopenta-1,3-dien 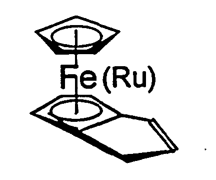
b) Ferroceno[2,3]ind-1-en bzw. Ruthenoceno[2,3]ind-1-en 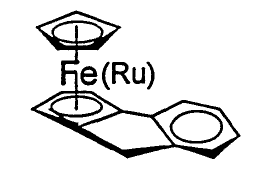
c) 9-Ferrocenylfluoren bzw. 9-Ruthenocenyl[2,3]fluoren

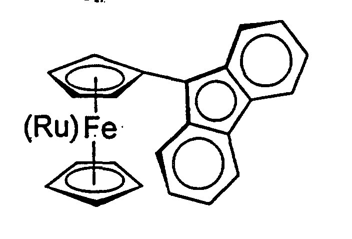

Die Verbindungen dieser Gruppen können gegebenenfalls verschieden substituiert sein, wobei die Substituenten die Bedeutung von X₁ und X₂ besitzen oder aber ferrocenyl- bzw. ruthenocenylsubstituiert bzw. -anelliert sind.
Im Falle der unsymmetrischen Metallocene können als Liganden L₂ beispielsweise verschieden substituierte oder unsubstituierte Cyclopentadienyl-, Indenyl-, Fluorenyl- oder Amido-, Phosphido- und Arsenidoverbindungen verwendet werden, wobei die Substituenten dieser Liganden die Bedeutung von X₁ und X₂ besitzen oder aber ferrocenyl- bzw. ruthenocenylsubstituiert, bzw. -anelliert sind.

Ein weiterer Gegenstand der Erfindung ist die Verwendung der erfindungsgemäßen Metallocene als Polymerisationskatalysatoren bei der Polymerisation von Olefinen, sowie ein Olefin-Polymerisationsverfahren, bei dem die erfindungsgemäßen Metallocene als Katalysatoren eingesetzt werden.

Bevorzugt wird bei der Olefinpolymerisation ein Cokatalysator, beispielsweise ein Aluminoxan der Formel IV für den linearen Typ: 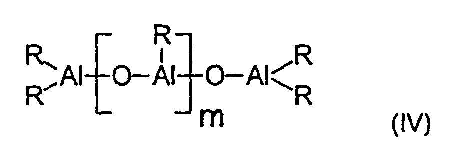 und / oder der Formel V: 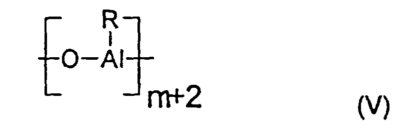 für den cyclischen Typ eingesetzt, wobei in den Formeln IV und V die Reste gleich oder verschieden sein können und eine C₁-C₆-Alkylgruppe, eine C₆ - C₁₀-Aryl- bzw. Alkylarylgruppe bedeuten und m eine ganze Zahl von 1 - 50. Bevorzugt sind die Reste gleich und bedeuten Methyl, Isobutyl, Phenyl oder Benzyl, besonders bevorzugt ist Methyl. Das Aluminoxan kann auf verschiedene Arten nach bekannten Verfahren hergestellt werden. Eine Möglichkeit ist beispielsweise die Umsetzung von Aluminiumalkylen mit kristallwasserhaltigem Aluminiumsulfat (Hoechst EP 302424). In der vorliegenden Erfindung wird handelsübliches MAO (Methylaluminoxan, Fa. Witco, BRD) verwendet.
Es ist auch möglich, das Metallocen der Formel I vor der Verwendung in der Polymerisationsreaktion mit einem Aluminoxan der Formel IV undloder V zu mischen. Das Mischen wird bevorzugt in Lösung vorgenommen. Bevorzugt wird dabei das Metallocen in einem inerten Kohlenwasserstoff aufgelöst und anschließend mit der Aluminoxanlösung vermischt. Als inerter Kohlenwasserstoff eignet sich beispielsweise ein aliphatischer oder aromatischer Kohlenwasserstoff. Bevorzugt wird Toluol verwendet.
Die Konzentration des Aluminoxans in der Lösung liegt üblicherweise im Bereich von 5-30 Gew.-% bezogen auf die Gesamtlösung. Das Metallocen wird vorzugsweise in einer Menge von 10⁻⁴ bis 1 mol pro mol Aluminoxan eingesetzt. Die Mischzeit beträgt etwa 5 min bis 24 Stunden, vorzugsweise 5 bis 60 Minuten. Man arbeitet üblicherweise bei einer Temperatur von -10 bis +70°C, insbesondere bei 10 bis 40°C.
Das Metallocen kann auch auf einen Träger aufgebracht werden. Geeignete Träger sind beispielsweise die anorganischen Oxide der Metalle der II - IV Hauptgruppe des Periodensystems. Bevorzugt sind die Oxide der Metalle Magnesium, Calcium, Aluminium, Silicium, Bor und deren Mischungen. Insbesondere bevorzugt sind z. B. die im Handel erhältlichen Aluminiumoxide "Alumina Typ C" (Fa. Degussa) und Siliciumoxide vom Typ "Silica Davison Grade 952 - 957" oder vom Typ Aerosil (Fa. Degussa), sowie Mischungen aus Al₂O₃ und SiO₂.
Die Polymerisation kann in Lösungs-, Suspensions- oder Gasphasenverfahren kontinuierlich oder diskontinuierlich bei einer Temperatur von -10 bis +200°C, vorzugsweise +20 bis +80°C durchgeführt werden. Polymerisiert oder copoymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 20 C-Atomen. Ra und Rb können jedoch auch mit den sie verbindenden C-Atomen einen Ring bilden. Beispielsweise werden solche Olefine wie Ethylen, Propylen, 1-Buten, 1-Hexen, 4-Methyl-1-penten, 1-Octen, Cyclopenten, Norbornen oder Norbornadien polymerisiert oder copolymerisiert. Insbesondere werden Ethylen, Propylen und Cyclopenten polymerisiert oder copolymerisiert.
Als Molmassenregler wird, falls erforderlich, Wasserstoff zugegeben. Der Gesamtdruck der Polymerisation beträgt 0,5 - 150 bar. Bevorzugt ist die Polymerisation in dem Druckbereich von 1 - 40 bar.
Es hat sich als vorteilhaft erwiesen, die Umsetzung der Monomeren in Gegenwart des Metal!ocenkatalysatorsystems bei einem Molverhältnis von Aluminium der oligomeren Alumoxanverbindung zum Übergangsmetall der Metallocenverbindung von 10⁶ : 1 bis 10¹ : 1, bevorzugt 10⁴ : 1 bis 10² : 1 durchzuführen.

Wenn die Polymerisation als Suspensions- oder Lösungspolymerisation durchgeführt wird, wird ein inertes Lösemittel verwendet. Beispielsweise können aliphatische oder cycloaliphatische Kohlenwasserstoffe, wie Pentan, Hexan oder Cyclohexan verwendet werden. Brauchbar ist auch Toluol. Bevorzugt wird im flüssigen Monomeren polymerisiert.

Bei der Copolymerisation von Ethylen mit Propylen wird bevorzugt in flüssigem Propylen oder in Hexan als Suspensionsmittel polymerisiert. Vorzugsweise wird bei der Polymerisation in flüssigem Propylen das Ethylen in der Menge zugeführt, daß sich über der Flüssigphase ein Partialdruckverhältnis P_{C2}/P_{C3} von größer als 0,5, insbesondere größer als 1,0 einstellt ( P_{C2}= Partialdruck des Ethylens in der Gasphase über der Suspension; P_{C3} = Partialdruck des Propylens in der Gasphase über der Suspension). Bei der Copolymerisation in Hexan als Suspensionsmittel wird ein Ethylen /Propylen-Gasgemisch mit einem Propylengehalt von einem bis 50 Mol%, vorzugsweise 5 bis 30 Mol% zugesetzt. Der Gesamtdruck wird während der Polymerisation durch Nachdosierung konstant gehalten.

Die Dauer der Polymerisation beträgt im allgemeinen etwa 10 Minuten bis 6 Stunden, vorzugsweise 30 Minuten bis 2 Stunden.

Die erfindungsgemäß verwendeten Katalysatoren erweitern die Palette der polymerisationswirksamen Metallocene zur Darstellung von Polyolefin-Homo- und Copolymeren. Insbesondere zeichnen sich die erfindungsgemäßen Metallocene dadurch aus , daß sie im technisch interessanten Temperaturbereich zwischen 20 und 80°C Polymere und Copolymere mit breiter Molmassenverteilung erzeugen, die im Bereich von Polyolefinen liegen, die mit klassischen Ziegler-Natta- Katalysatoren hergestellt werden.

Die nachfolgenden Beispiele sollen die Erfindung näher erläutern.
Es bedeuten:
- M_{w}=: gewichtsmittlere Molmasse in g/mol,
- Mₙ =: zahlenmittlere Molmasse in g/mol,
- M_{w}/Mₙ =: Molmassenverteilung, ermittelt durch Gelpermeationschromatographie,
- MS: Massenspektroskopie 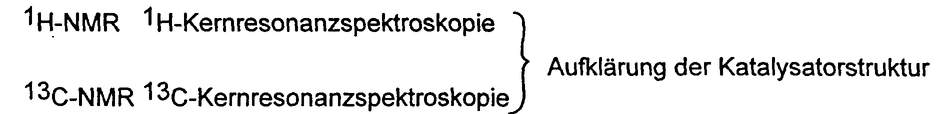
- IR: Infrarotspektroskopie

### BEISPIEL I:

### rac-(4-Ferrocenylferroceno[2,3]cyclopentadienyl)dimethylsilylen-(tetramethylcyclopentadienyl)zirkoniumdichlorid

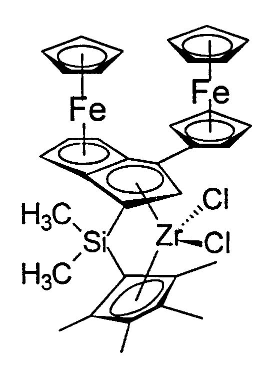

### A) 3-Ferrocenylferroceno[1.2]cyclopenta-1.3-dien

1.33 g (3.15 mmol) 4-Ferrocenylferroceno[2,3]cyclopenta-2,4-dien-1-on (*T.S. Abram, W.E. Watts, J. Chem. Soc*., *Perkin I*, *1531 (1977)* werden in 30 ml THF gelöst und bei 0°C mit 2.5 ml Lithiumtriethylborhydrid (1.26 M in THF; 3.15 mmol) versetzt. Nach zehnminütigem Rühren bei Raumtemperatur wird das THF abgezogen, der Rückstand mit 0.5 ml Wasser, 100 ml Diethylether sowie 1.0 ml Tetrafluoroborsäure-Diethyletherat versetzt. Nachdem die Suspension 5 Minuten mit Ultraschall behandelt wurde, wird die tiefblaue Suspension schlenkfiltriert. Der Rückstand wird mehrmals mit Diethylether gewaschen und im Vakuum getrocknet.

Das Kation wird in 20 ml THF gelöst und bei -50°C mit einer Lösung von 250 mg Natrium (10.9 mmol) in 50 ml Ammoniak versetzt. Die Reaktionslösung wird auf Raumtemperatur erwärmt, auf gesättigte Ammoniumchloridlösung gegossen und mit Diethylether extrahiert. Das Rohprodukt wird nach dem Entfernen des Diethylethers über Alox (basisch, Merck, Aktivitätsstufe IV) chromatographiert. Mobile Phase: Diethylether : n-Hexan = 50:50, 2% Diethylamin.
Ausbeute: 800 mg (entspricht einer Ausbeute von 62 % d. Th.)

### B) Umsetzung zu (4-Ferrocenylferroceno[2,3]cyclopentadienyl)dimethylsilylen-(tetramethylcyclopentadienyl)zirkoniumdichlorid

400 mg 2-Ferrocenylferroceno[3,4]cyclopenta-1,3-dien (0.94 mmol) werden in 30 ml THF gelöst und bei -50°C mit 0.60 ml n-Butyllithium (1.6 M in Hexan, 0.96 mmol) versetzt. Nach 5 Minuten wird die tiefblaue Lösung mit 0.22 ml Tetramethylcyclopentadienyldimethylchlorsilan (1 mmol) *(D. Stem*, *M. Sabat*, *T.J. Marks*, *J. Am. Chem. Soc. 112 (1990) 9558)* versetzt. Nachdem die Lösung auf Raumtemperatur gebracht und neuerlich auf -50°C gekühlt wurde, wird die Lösung mit 1.2 ml n-Butyllithium (1.6 M in Hexan, 1.92 mmol) sowie 380 mg Zirkoniumtetrachlorid·2THF (1.0 mmol) versetzt. Anschließend wird die Lösung 1 Stunde lang refluxiert. Nach dem Entfernen des Lösungsmittels wird der Rückstand mit n-Hexan gewaschen und anschließend in 20 ml Diethylether gelöst. Nach einer Schlenkfiltration wird das Lösungsmittel im Vakuum entfernt. Der Rückstand, ein bräunliches Pulver, färbt sich an der Luft schnell, bei der Lagerung nach einiger Zeit tief grün. Sämtliche Spektren wurden von der grünen Modifikation angefertigt.

IR (KBr): 3400 b,vs; 2970w, 2917w; 2856w; 1634b,vs; 1532m; 1457w; 1412w; 1383w; 1258m, 1181w, 1106m, 1046m; 1001w; 803b,s; 589vb,s, 482b,s.

¹H-NMR (CDCl₃, TMS): Diemthylsilylendomäne: -0.05 ppm(s), 0.07 ppm(s), Tetramethyl-Cp Domäne: 1.75-1.95 ppm(m);1.15-1.40 ppm(m); 1.77 ppm(s) 1.90 ppm(s); 1.96 ppm(s); 2.05 ppm(s); 2.18 ppm(s);Ferrocen-Domäne: 3.70 ppm(s); 3.8-4.5 ppm(m); 4.08 ppm(s).

¹³C-NMR (CDCl₃, TMS): -0.17 ppm; 0.22 ppm; 0.86 ppm, 1.50 ppm; 13.67 ppm; 13.76 ppm; 17.95 ppm, 18.72 ppm; 25.50 ppm; 26.22 ppm; 26.33 ppm; 66.8 ppm; 67.9 ppm; 68.6 ppm; 69.1 ppm; 70.5 ppm.

MS (El. 70 eV):m/z = 746.5 (M⁺·,51%) 369 (Tetramethylcyclopentadienyldimethylsilylenpentalenylzirkonium, 61%)

Mikrosonde: C, Fe, Cl, Zr, Si in konsistentem relativen Elementarverhältnis.

### BEISPIEL II:

### rac-(Ferroceno[2,3]inden-1-yl)dimethylsilylen(2-methylinden-1-yl) hafniumdichlorid

400 mg (1.46 mmol) Ferroceno[2,3]inden-1en *(M. Cais*, *A. Modiano, A. Raveh*, *J. Am. Chem. Soc.,* ***87***, *5607 (1965;) T. Lanez*, *P.L. Pauson, J. Chem. Soc. Perkin 1, 2437 (1990))* werden in 30 ml THF abs. gelöst, auf -50°C abgekühlt und mit 0.95 ml n-Butyllithium (1.6 M in Hexan, 1.52 mmol) versetzt. Nach 90 Minuten werden 1.9 ml Dimethyldichlorsilan (15 mmol) zugegeben. Nach 5 Minuten werden alles Lösungsmittel sowie der Überschuß Dimethyldichlorsilan im Vakuum abgezogen. Der Rückstand wird in THF gelöst und mit einer Lösung von 2-Methylindenid in 30 ml THF, zubereitet aus 30 ml 2-Methylinden *(C.F. Koelsch*, *P.R. Johnson, J. Am. Chem. Soc.,* ***65,*** *567 (1943);* mit ca. 35% Hexan, ca. 1.5 mmol) und 0.95 ml n-Butyllithium in 30 ml THF bei -50°C, versetzt. Daraufhin rührt man 30 Minuten bei Raumtemperatur. Nach neuerlichem Abkühlen auf -50°C werden 1.9 ml n-Butyllithium (1.6 M in Hexan, 3.04 mmol) zugesetzt. Schlußendlich werden 490 mg Hafniumtetrachlorid (1.5 mmol), gelöst in 30 ml THF, nach Erwärmen auf Raumtemperatur und neuerlichem Abkühlen auf -50°C zugesetzt. Das Reaktionsgemisch wird 90 Minuten lang refluxiert. Nach dem Entfernen des Lösungsmittels wird der Rückstand in Diethylether gelöst und schlenkfiltriert. Eine rote Verfärbung des Produkts ist auf Spuren von Lithium-2-methylindenid zurückzuführen. Diese können durch Entfernen des Lösungsmittels vor dem letzten Deprotonierungsschritt vermieden werden. Nach dem Abziehen des Ethers im Vakuum verbleiben ca. 500 mg Produkt (50 % d. Th.).

IR (KBr): 3402vb,vs; 2929s; 2858s; 1617b,s; 1463s, 1439m; 1382m; 1267w; 1254m; 1106s; 1067s; 1019s; 965m; 845s; 807s; 753s.

¹H-NMR (CDCl₃, TMS): Es können anhand des Ferrocen-Teils 2 diastereomere Verbindungen (a,b) im Verhältnis (ca.) 10:1 beobachtet werden.
Dimethylsilylen-Domäne -0.65 ppm(s); Methyl-Domäne:2.00 ppm(s); Ferrocen-Domäne: 3.71 ppm (s, a); 4.23 ppm("t", a); 4.04 ppmn("t", a); 3.90 ppm(dxd, a); 3.74 ppm(s, b); 4.14 ppm("t", b); 4.54 ppm(dxd, b); 4.58 ppm(dxd, b); Inden-Domäne: 5.51 ppm(s); Aromaten-Domäne: 6.97-7.57 ppm(m).

¹³C-NMR (CDCl₃, TMS): SiMe₂: -7.43 ppm; Methyl: 35.6 ppm; 35.8 ppm; Ferrocen-Domäne: 58.7 ppm; 58.8 ppm; 61.3 ppm, 61.4 ppm; 69.5 ppm; 70.1 ppm quartäre C: 91.8 ppm; 95.0 ppm; 101.1 ppm; 103.4 ppm;106.1 ppm Aromaten-Domäne: 119.6 ppm; 120.3 ppm; 122.7 ppm; 123.2 ppm; 123.5 ppm; 123.7 ppm; 124.0 ppm; 124.2 ppm,124.3 ppm; 124.6 ppm; 124.9 ppm; 125.2 ppm; 125.4 ppm; 126.2 ppm; 126.7 ppm; quartäre C: 137.7 ppm; 141.5 ppm; 149.3 ppm.

MS (El, 70 eV): m/z = 508.5 (M⁺·-200, 36%); 379 (91%); 272 (Ferroceno[2,3] inden-1-yl, 22%) Mikrosonde: C, Fe, Cl, Si, Hf in konsistentem relativen Elementarverhältnis.

### BEISPIEL III:

### Bis(ferroceno[2,3]inden-1-yl)dimethylsilylenzirkoniumdichlorid

### A) Bis(ferroceno[2,3]inden-1-yl)dimethylsilan

280 mg Ferroceno[2,3]inden *(M. Cais, A. Modiano, A. Raveh, J. Am. Chem. Soc.,* ***87,*** *5607 (1965))* (1.02 mmol) werden in 30 ml THF gelöst, auf -60°C abgekühlt und mit 0.55 ml n-Butyllithium (2 M in Hexan, 1.1 mmol) versetzt. Man erwärmt auf Raumtemperatur, rührt weitere 15 Minuten, kühlt erneut auf -60°C und fügt 0.145 ml Dimethyldichlorsilan (1.12 mmol) zu. Nach Erwärmung auf Raumtemperatur wird das Lösungsmittel abgezogen. Die Reaktionskontrolle auf vollständige und quantitative Reaktion kann mittels Dünnschichtchromatographie vollzogen werden.

### B) Umsetzung zu Bis(ferroceno[2,3]inden-1-yl)dimethylsilylenzirkoniumdichlo rid

Der orange Festkörper wird erneut in 30 ml THF gelöst, auf -60°C abgekühlt und mit 0.40 ml n-Butyllithium (2 M in Pentan, 0.8 mmol) versetzt. Man läßt auf Raumtemperatur kommen, und nach weiteren 5 Minuten wird die Lösung erneut auf -60°C abgekühlt und mit 147 mg Zirkoniumtetrachlorid·2THF (0.39 mmol) versetzt. Das Reaktionsgemisch wird 3 Stunden lang refluxiert, anschließend wird das Lösungsmittel abgezogen, der Rückstand mit n-Hexan gewaschen und schlenkfiltriert. Der Rückstand wird in Diethylether gelöst und filtriert. Nach dem Entfernen des Lösungsmittels können 311 mg Produkt isoliert werden. (80% d. Th.)

IR (KBr): 2964m; 2920w; 1600b,m; 1500w; 1493w; 1461w; 1439w; 1412w; 1262s; 1106vs; 1067vs; 1021vs; 845s; 803vs; 760vs; 511m; 488m; 465m, 448m.

Mikrosonde: C, Fe, Si, Zr in konsistentem relativen Elementarverhältnis.

### BEISPIEL IV: Bis(9-ferrocenylfluorenyl)titandichlorid

214 mg 9-Ferrocenylfluoren (0.61 mmol) *(M. Buchmeiser*, *H. Schottenberger*, *Organometallics*, ***12***, *2472 (1993))* werden in 20 ml THF gelöst, auf -60°C abgekühlt und mit 0.40 ml n-Butyllithium (1.6 M in Hexan, 0.64 mmol) versetzt. Man erwärmt auf Raumtemperatur, rührt weitere 15 Minuten, kühlt erneut auf -60°C ab und fügt 105 mg Titantetrachlorid·2THF (0.31 mmol) zu. Nach zweistündigem Rühren bei Raumtemperatur wird alles Lösungsmittel im Vakuum abgezogen, der Rückstand in n-Hexan digeriert und die Lösung schlenkfiltriert. Nach Entfernen des Lösungsmitttels im Vakuum können 199 mg Produkt aus der Hexan Lösung isoliert werden. (80% d. Th.)

IR (KBr): 3365b,m; 2960m; 2927m; 2855w; 1629b,m; 1449m; 1412w; 1262vs; 1098b,vs; 1025b,vs; 874b,m; 805vs; 745m; 480w.

1H-NMR (CDCl3, TMS): 4.17 ppm(s, 10H); 4.74 ppm, (t, 4 H); 5.35 ppm(t, 4 H); 8.24 ppm(m),
¹³C-NMR (CDCl₃, TMS): 67.9 ppm; 68.2 ppm; 72.9 ppm; 118.6 ppm; 124.1 ppm; 126.7 ppm; 127.0 ppm.

MS (El. 70 eV): m/z = 761 (M+.-56 (Fe), 3%); 696 (M⁺·-121 (FeCp), 15%); 632 (M⁺·-185 (fec), 1.5%); 575 (M⁺·-242 (2 FeCp), 7.5%); 349 (Ferrocenylfluorenylradikalkation⁺·, 100%)

Mikrosonde: C, Fe, Ti in konsistentem relativen Elementarverhältnis.

### BEISPIEL V:

### rac-(Ferroceno[2,3]inden-1-yl)dimethylsilylen(cyclopentadienyl)zirkoniumdichlorid

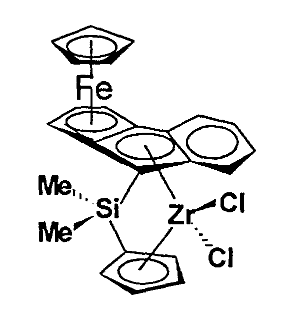

0.205 g Ferroceno[2,3]inden *(M. Cais*, *A. Modiano*, *A. Raveh*, *J. Am. Chem. Soc.,* ***87,*** *5607 (1965))* (0.75 mmol) werden in 20 ml THF gelöst, auf -80°C abgekühlt und mit 0.28 ml n-Butyllithium (2 M in Pentan) versetzt. Man erwärmt die Lösung auf Raumtemperatur, kühlt erneut auf -80°C und fügt 1.15 ml Dimethyldichlorsilan (8.9 mmol) zu. Die Lösung verfärbt sich schlagartig gelb. Daraufhin wird alles Lösungsmittel im Vakuum abgezogen. Nachdem der Rückstand neuerlich in 20 ml THF gelöst und auf -80°C gekühlt wurde, werden 0.40 ml einer Lösung von Natriumcyclopentadienid in THF (2 M) zugegeben. Man erwärmt die Lösung neuerlich auf Raumtemperatur, kühlt wiederum auf -80°C ab und fügt 0.80 ml n-Butyllithium (2 M in Pentan) zu. Nachdem zur Vervollständigung der Deprotonierungsreaktion auf Raumtemperatur erwärmt wurde, werden bei -50°C 285 mg Zirkoniumtetrachlorid·2THF (0.75 mmol), gelöst in 40 ml THF zugegeben. Nach dem Erwärmen auf Raumtemperatur wird die Lösung für 2 Stunden auf 65°C erwärmt, daraufhin 18 Stunden bei Raumtemperatur gerührt, sowie 45 Minuten mit Ultraschall behandelt. Das Lösungsmittel wird abgezogen, der Rückstand wird in n-Hexan gelöst und schlenkfiltriert. Nach dem Entfernen des Lösungsmittels im Vakuum können 374 mg Produkt (90% d. Th.) isoliert werden. Dieses enthält laut Massenspektrum auch Spuren der Verbindung III (m/z=604).

IR (KBr): 3095w; 2925m; 1607m; 1495m; 1465m; 1439m; 1414m; 1262vs; 1169m; 1110b,vs; 1019b,vs; 955s; 801b,vs; 760s; 731s; 488m; 463m; 448m; 403m.

MS(El, 120°C, 10⁻⁷ Torr): m/z = 429 (2.6%); 388 (100%); 331 (19.9 %, Ferroceno [2,3]inden-1-yl-dimethylsilylenradikalkation);316(2.6%, Ferroceno[2,3]inden-1-yl-methylsilylenradikalkation);301(2.5%, Ferroceno[2,3]inden-1-yl-silylenradikalkation); 273 (26.0 %, Ferroceno[2,3,a]inden-1-yl-radikalkation)

Mikrosonde: C, Fe, Si, Zr in konsistentem relativen Elementarverhältnis.

### BEISPIEL VI:

### Bis(4-ferrocenylferroceno[2,3]cyclopentadienyl)dimethylsilylenzirkoniumdichlorid (Diastereomerengemisch)

300 mg (0.74 mmol) 2-Ferrocenylferroceno[3,4]cyclopenta-1,3-dien *(T.S. Abram, W.E. Watts*, *J. Chem. Soc*., *Perkin I*, *1531 (1977)* werden in 30 ml THF gelöst und bei -50°C mit 0.46 ml n-Butyllithium (1.6 m in Hexan, 0,74 mmol) versetzt. Nach 5 Minuten werden 0.50 ml Dimethyldichlorsilan (0.4 mmol) zugegeben. Nachdem die Reaktionslösung auf Raumtemperatur erwärmt wurde, werden neuerlich bei -50°C 0.46 ml n-Butyllithium (s.o.) zugegeben. Nach neuerlichem Erwärmen auf Raumtemperatur und Abkühlen auf -50°C werden 140 mg Zirkoniumtetrachlorid·2THF (0.37 mmol) zugegeben. Das Reaktionsgemisch wird 1 Stunde lang refluxiert. Anschließend wird bis zur Trockne eingeengt und der Rückstand mit Diethylether (1. Fraktion) bzw. Methylenchlorid (2. Fraktion) extrahiert. Beide Fraktionen ergeben ein jeweils grünliches amorphes Pulver. Die 1. Fraktion repräsentiert die diastereomeren Zielstrukturen. Fraktion 2 enthält hauptsächlich lediglich oligomere Produkte Ausbeute: 150 mg (40 % d. Th.)

¹H-NMR (CDCl₃, TMS): 3.4-4.3 ppm, Ferrocendomäne

¹³C-NMR (CDCl₃, TMS): -0.2 ppm; 68.3 ppm; 69.5 ppm.

MS (El. 70 eV), in den Klammern sind die zuweisbaren Fragmentierungen angegebenen: m/z= 846.5 (M⁺·-185 (Fc), 32%); 818.5 (M⁺·-214 (Fc-Si), 54%); 696.5 (M⁺·-336 (Fc-FeCp-Si), 33%); 620.0 (M⁺·-412.5, (2 Fc, SiCH₃), 100%); 605.0 (M⁺·-427.5 (2 Fc, Si(CH₃)₂), 29%); mit Fc=Ferrocenyl-, Cp=Cyclopentadienyl-.

Mikrosonde: C, Fe, Cl, Si, Zr in konsistentem relativen Elementarverhältnis.

### BEISPIEL VII:

### rac-(Ferroceno[2,3]inden-1-yl)dimethylsilylen(t-butylamido)zirkoniumdichlorid

400 mg Ferroceno[2,3,]inden (*M. Cais*, *A. Modiano, A. Raveh*, *J. Am. Chem. Soc.,* ***87***, *5607 (1965);* 1.46 mmol) werden in 50 ml Diethylether gelöst und bei T=-50°C mit 0.95 ml n-Butyllithium (1.6 M in Hexan, 1.52 mmol) versetzt. Nachdem die Lösung auf Raumtemperatur erwärmt und neuerlich auf -50°C gekühlt wird, werden 2.0 ml Dimethyldichlorsilan (15 mmol), gelöst in 70 ml Diethylether, zugegeben. Nachdem alles Lösungsmittel sowie der Überschuß Dimethyldichlorsilan im Vakuum abgezogen wurden, wird der Rückstand in THF : Diethylether = 20:80 suspendiert und mit einer Lösung von t-Butylamid in 50 ml Diethylether, hergestellt aus 16 ml t-Butylamin und 0.95 ml n-Butyllithium (s.o.), versetzt. Nach vierstündigem Rühren werden bei T = -60°C 1.90 ml n-Butyllithium (1.6 M in Hexan, 3.04 mmol) zugegeben. Man erwärmt auf Raumtemperatur, kühlt neuerlich auf -60°C ab und fügt 550 mg Zirkoniumtetrachlorid (1.46 mmol) zu. Anschließend wird das Reaktionsgemisch 1 Stunde lang refluxiert. Nach dem Entfernen des Lösungsmittels wird der Rückstand in Diethylether gelöst und schlenkfiltriert. Schließlich wird der Ether im Vakuum abgezogen. Die Zielverbindung bildet ein tief orange gefärbtes Pulver.
Ausbeute: 780 mg (95 % d. Th.)

IR (KBr): 3462 b,s; 2971vs; 2923s; 2892vs; 2798vs; 2696m; 2586s; 2487m; 2034m; 1634b,m; 1609m; 1505m; 1476m; 1466m; 1428m; 1403m; 1378s; 1301m, 1262m, 1216m, 1106m, 1019m; 1001w; 802b,m; 760m; 448b,w.

¹H-NMR (CDCl₃, TMS): t-Butyl- u- SiMe₂-Domäne: 1.00-1.54 ppm(m, 12 H); 1.78 ppm(bs, 3 H); Ferrocen-Domäne: 3.76 ppm(s, 5 H); 4.04 ppm("t", 1 H); 4.39 ppm(dxd, 1 H);4.43 ppm(dxd, 1 H); Aromaten-Domäne: 7.00-7.36 ppm(m, 4 H)

¹³C-NMR (CDCl₃, TMS): t-Butylamiddomäne: 25.53 ppm; 31.30 ppm; 32.97 ppm; Ferrocendomäne: 58.79 ppm; 63.11 ppm; 69.48 ppm; 70.18 ppm; Quartäre Ferrocen C 92.29 ppm, 72.74 ppm; Aromatendomäne: 120.11 ppm; 124.55 ppm; 125.08 ppm; 126.55 ppm; Quartäre Aromaten C 142.11 ppm, 147,26 ppm.

MS (El, 70 eV): m/z = 548.5 (M⁺·-15(CH₃), 2 %); 412.5 (M⁺·-151 (CpFe, 2 CH₃), 6%); 384.0 (M+·-180.5 (CpFe, Si(CH₃)₂, 10 %); 327 (M⁺·-236 (CpFe, Si(CH₃)₂, t-Butyl), 100%); 272 (Ferrocenoindenyl), 47%)

Mikrosonde: C, Fe,N, Cl, Si, Zr in konsistentem relativen Elementarverhältnis.

### BEISPIEL VIII:

### rac-(Ferroceno(2,3)inden-1-yl)dimethylsilylen(tetramethylcyclopentadien) zirkoniumdichlorid

### A) Synthese von 2,3,4,5-Tetramethylcyclopentadienyldimethylchlorsilan (D. Stern, M. Sabat, T.J. Marks, J. Am. Chem. Soc. 112 (1990) 9558)

4,0 g (32,8 mmol)1,2,3,4-Tetramethylcyclopentadien (F.X.Kohl; P. Jutzi, J. Organomet. Chem. 243 (1983) 119-121; G. Schmitt, S. Özman, Chemikerzeitung 100 (1976), 143; E.E. Bunel; P. Campos, J. Ruz; L. Valle, Organometallics 7 (1988), 1828-1838; C.M. Fendrick; L.D. Schertz; V.W. Day; T.J. Marks, Organometallics 7, (1988) 1828-1838 und dort zitierte Literatur) werden in 50 ml THF abs. gelöst und mit 21 ml n-Butyllithium (1.6 M in Pentan, 33.6 mmol) versetzt. Man rührt 2 Stunden und fügt anschließend 4,50 g (33,3 mmol) Dimethyldichlorsilan, gelöst in 30 ml THF abs., tropfenweise bei 0°C zu. Anschließend rührt man weitere 20 Stunden. Nach Entfernen des Lösungsmittels im Vakuum und Abfiltrieren des bei der Reaktion gebildeten Lithiumchlorids wird der Rückstand vakuumdestilliert. Sdp.: 57 - 65°C (p= 0.1 Torr).
Ausbeute: 3.0 g (42 % d. Th.). Die leicht gelb gefärbte Verbindung wird bei -18°C gelagert.

### B) 2-Ferrocenylbenzoesäure

*(M. Cais*, *A. Modiano*, *A. Raveh*, *J. Am. Chem. Soc.,* ***87,*** *5607 (1965); R.C. Kerber*, *D.J. Entholt*, *Synthesis, 449 (1970); T. Lanez, P.L. Pauson, J. Chem. Soc. Perkin 1*, *2437 (1990))*
27,27 g Anthranilsäure [0,20 mol] werden in 500 ml halbkonzentrierter Salzsäure (5M) suspendiert und eine Lösung von 19,68 g Natriumnitrit [0,20 mol] in 150 ml Wasser unter Eiskühlung langsam zugetropft. Während des Zutropfens übersteigt die Temperatur der Reaktionsmischung 0°C nicht. Es entsteht eine klare gelb gefärbte Diazonium-Lösung, die noch ca. eine halbe Stunde bei 0°C gerührt wird. Anschließend wird die Lösung pneumatisch zu einer Lösung von 44,65 g Ferrocen [0,24 mol] und 0,81 g Acetonitril [0,02 mol] in 500 ml Toluol unter starkem Rühren zugetropft. Das Reaktionsgemisch wird über Nacht bei Raumtemperatur gerührt. Nach Zugabe von ca. 2 g Natriumhyposulfit zum Reduzieren von Ferrocenium-lonen, wird viermal mit je 200 ml Diethylether extrahiert.
Die vereinigten organischen Phasen werden dreimal mit je 100 ml 2 N Ammoniak extrahiert. Die ammoniakalische Lösung wird auf Eis / Salzsäure gequencht, und das Hauptprodukt 2-Ferrocenylbenzoesäure sowie das Nebenprodukt 1,1'-Bis-(2-carboxyphenyl)-ferrocen werden dreimal mit je 100 ml Diethylether extrahiert.
Nach Abziehen des Ethers werden 49.62 g Rohprodukt (2-Ferrocenyl-benzoesäure und 1,1'-Bis-(2-carboxyphenyl)-ferrocen) isoliert.
Das Rohprodukt wird in Diethylether gelöst und auf etwa 25 g Kieselsäure (FLUKA 60741) adsorbiert. Diethylether wird im Vakuum entfernt und 2-Ferrocenylbenzoesäure durch kontinuierliche Extraktion in einer Soxhlet-Apparatur mit 300 ml Petrolether 50/70 isoliert. Nach Entfernen des Petrolethers im Vakuum fällt das Produkt als helloranges Pulver an.
Ausbeute: 35,4 g 2-Ferrocenylbenzoesäure (58,1 % d.Th.)

### C) Ferroceno[2,3]inden-1-on

*(M. Cais,* A. *Modiano, A. Raveh, J. Am. Chem. Soc., 87, 5607 (1965); R.C. Kerber*, *D.J. Entholt*, *Synthesis*, *449 (1970); T. Lanez, P.L. Pauson,* J. *Chem. Soc. Perkin 1, 2437 (1990))*

In einem Schlenkkolben mit Quecksilberventil werden 20,00 g 2-Ferrocenylbenzoesäure [65.3 mmol] in 400 ml absolutem Methylenchlorid gelöst und auf 0°C gekühlt. Es werden 14.30 g Phosphorpentachlorid [68.6 mmol] zugefügt und nach etwa halbstündigem Equilibrieren auf Raumtemperatur wird für ca. 2 Stunden bis zum Eintreten einer violetten Färbung refluxiert. Nach erneutem Abkühlen auf 0°C werden vorsichtig 9.15 g Aluminiumtrichlorid [68.6 mmol] zugegeben, anschließend wieder auf Raumtemperatur erwärmt und etwa eine Stunde gerührt. Nach Quenchen der Reaktionsmischung mit eisgekühlter wässriger Citronensäurelösung (29 g, 2 Molequiv. bezogen auf AlCl₃) wird mehrmals mit Diethylether extrahiert, die vereinigten etherischen Phasen über Natriumsulfat getrocknet, filtriert und nach nach Zugabe von etwa 40 g Silicagel (Fluka 60741) das Lösungsmittel abgezogen.
Der Rückstand wird einer kontinuierlichen Soxhlet-Extraktion mit 500 ml Petrolether (50-70°C) unterworfen. Bei Abkühlung des Lösungsmittels kristallisiert nach Animpfen R,S-Ferroceno [2,3] inden-1-on in Form violetter Nadeln. Eine weitere, oft ölige Ausbeute (bis zu 17 %) fällt beim Trockenziehen der Mutterlauge an.

Ausbeute: 10.41 g Ferroceno[2,3]inden-1-on (55,3 % d.Th.) kristallines Produkt 3.20 g Ferroceno[2,3]inden-1-on (17,0% d.Th.) öliges Produkt

### D) Ferroceno[2,3]inden-1-ol

*(M. Cais, A. Modiano, A. Raveh*, *J. Am. Chem. Soc.,* ***87,*** *5607 (1965); R.C. Kerber*, *D.J. Entholt*, *Synthesis, 449 (1970))*
6,531 ml SMEAH (Natrium-bis-(2-methoxyethoxy)aluminiumdihydrid, 80 % in Toluol, 23.33 mmol, 1,2 moleq.) werden in 50 ml absolutem Toluol gelöst und in einem Schlenk-Kolben vorgelegt. 6,112 g Ferrocenoindenon (21, 2 mmol) werden ebenfalls in ca. 50 ml absolutem Toluol gelöst und in einen Tropftrichter überführt. Unter starkem Rühren wird dann innerhalb einer Stunde langsam zugetropft, so daß das leicht schäumende System sich nicht über Raumtemperatur aufheizt.

Nach Rühren über Nacht wird das System mit Eis gequencht, mit verdünnter Salzsäure (2 M) angesäuert und dreimal mit je 50 ml Diethylether extrahiert. Die vereinigten organischen Phasen werden über Natriumsulfat getrocknet, und das Lösungsmittel im Vakuum abgezogen. Es bleiben 5,983 g R,S-Ferroceno[2,3]inden-1-ol als öliges Produkt zurück.
Ausbeute: 5,983 g (92,87 % d.Th.)

### E1) Ferroceno[2,3]ind-1-en über 2e⁻ - Reduktion

1.90 g Ferroceno[2,3]inden-1-ol (Isomerengemisch, 6.6 mmol) werden in 50 ml Diethylether abs. gelöst, auf -25°C abgekühlt und im Verlauf von 5 min. mit 1.80 ml Tetrafluoroborsäure (54% in Diethylether, 13.1 mmol) versetzt. Man läßt unter Rühren auf Raumtemperatur kommen. Die Lösung wird daraufhin schlenkfiltriert, der Rückstand mit Diethylether gewaschen und im Vakuum getrocknet.
Ausbeute: 1.98 g (84 % d. Th.)

IR (KBr): 3402b, vs; 3102m; 1634m; 1495m; 1422m, 1306m; 1084b,vs;1059b,vs; 853s; 771s; 744.8m; 694.63m; 534s; 521s; 480m.

MS (FAB): m/z = 273.0 (100%); 545.9 (18%)

600 mg Natrium werden in 30 ml NH_{3(I)} gelöst, mit 30 ml Diethylether abs. verdünnt und zu einer Suspension von 1.424 g Ferroceno[2,3]indenium-tetrafluoroborat (3.96 mmol) in 30 ml THF abs., gekühlt auf -50°C zugegeben. Man läßt das Reaktionsgemisch auf Raumtemperatur kommen und gießt auf 150 ml gesättigte Ammoniumchloridlösung. Man extrahiert mit Diethylether, trocknet über Natriumsulfat und flashchromatographiert den Rückstand nach Entfernen des Lösungsmittels über Silica G-60 (Fluka, 220-440 mesh; Säulendimensionen: 30x4 cm; mobile Phase: n-Hexan : Diethylether = 50 : 50). Die Verbindung kann als breite, schwer abtrennbare Bande erhalten werden. Restverunreinigungen werden durch Säulenchromatographie entfernt (Stationäre Phase: Silica G-60, 220-440 mesh, Fluka; mobile Phase: n-Hexan, Säulendimensionen: 3.5x80 cm; Flußrate 40 ml/min).
Ausbeute: 1.09 g (60 % d. Th.)

IR (KBr): 3097w; 3074w; 3056w; 3008w; 2914m; 2894m; 2819w; 1771w; 1719m; 1640m; 1623m; 1609m; 1497s; 1466m; 1443m; 1420s; 1360m; 1304m; 1260m; 1223m; 1173m; 1123s; 1106vs; 1052s; 1042s; 1021s; 1000vs; 949m; 878s; 861m; 832vs; 807vs; 762vs; 722vs; 648m; 577m; 542s; 511vs; 486vs; 465vs; 440vs; 426m.

¹H-NMR (CDCl₃, TMS): 3.50 ppm, (d, 1H J=20.1 Hz); 3.66 ppm, (d, 1H J=20.1 Hz); 3.78 ppm, (s, 5H) 4.08 ppm, (t, 1H), 4.39 ppm, (d, 1H, J=3.05 Hz), 4.44 ppm, (dxd, 1H, J=2.29 Hz, J=0.91 Hz), 7.0-7.4 ppm, (m, 4 H)

¹³C-NMR (CDCl₃; TMS): 32.9; 58.8; 63.1; 69.4; 70.1; 92.3; 92.7; 120.1; 124.5; 125.0; 126.5; 142.1; 147.3 ppm.

MS (El, 70eV): m/z= 274 M+· (100%), 209 (12%), 153 (54%), 121 (15%)

### E2) Ferroceno[2,3]ind-1-en über katalytische Hydrierung

Ferroceno[2,3]ind-1-en [7,00 g; 24,3 mmol] wird in 100 ml Eisessig gelöst, in einen 21 Hydrierungsreaktor gegeben und mit 50 ml Eisessig nachgespült. Anschließend werden 7,0 g Pd/C-Katalysator (5%, Fluka 75992) zugesetzt und mit weiteren 50 ml Eisessig versehen. Der Reaktor wird verschlossen auf 30°C aufgeheizt und bei einer Rührgeschwindigkeit von 400 U/min mit 10 bar H₂ bedrückt. Nach 11 Stunden bei 30°C wird der Reaktor auf Raumtemperatur abgekühlt und die Reaktionslösung abgelassen.
Nachdem der Reaktor 3 mal mit je 100 ml n-Hexan ausgespült wurde, werden die Lösungen vereinigt, der Katalysator abfiltriert und gewaschen (1 mal mit 50 ml Eisessig und 3 mal mit je 50 ml n-Hexan). Daraufhin wird die Lösung mit 1200 ml Wasser verdünnt und im Scheide-trichter extrahiert. Die wäßrige Phase wird anschließend mehrmals mit je 50 ml n-Hexan extrahiert (bis die wäßrige Phase fast farblos ist). Die organischen Phasen werden vereinigt, 2 mal mit je 100 ml gesättigter Natriumhydrogencarbonat-Lösung und 1 mal mit 100 ml Wasser gewaschen, mit Na₂SO₄ getrocknet, filtriert und das Lösungsmittel am Wasserstrahlvakuum abgezogen.

Der Rückstand wird säulenchromatographisch getrennt (Laufmittel: n-Hexan; stationäre Phase: Kieselgel 60 (Fluka 60738); Säulendimensionen: 25 x 4 cm). Ausbeute: 4,75 g Ferroceno[2,3]ind-1-en, (*rac*-4H-lndeno[2,3]ferrocen) (71,3 % d.Th.)

### F) Umsetzung zu rac-(Ferroceno[2,3] inden-1-yl)dimethylsilylen(tetramethylcyclopentadienyl)zirkoniumdichlorid

0.25 g (0,912 mmol) Ferroceno[2,3]ind-1-en werden in 30 ml THF abs. gelöst, auf -60°C abgekühlt und mit 0.60 ml n-Butyllithium (1.6 M in Pentan, 0.96 mmol) versetzt. Man läßt die Reaktionslösung bis zum Erreichen der Raumtemperatur stehen und rührt anschließend weitere 30 Minuten. Daraufhin werden 0.25 ml 1-(Chlordimethylsilylen)-2,3,4,5-tetramethylcyclopentadien (1.2 mmol) tropfenweise mittels einer 1 ml Spritze zugegeben. Die Lösung wechselt dabei ihre Farbe und schlägt von rot nach orange um. Nach 1 Stunde wird alles Lösungsmittel im Vakuum abgezogen, wobei auch überschüssiges Silylreagens entfernt wird. Anschließend wird der Rückstand in 30 ml THF abs. gelöst, auf -30°C gekühlt, mit 1.20 ml n-Bu-tyllithium (1.6 M in Pentan, 1,92 mmol) versetzt und nach Erwärmen auf Raumtemperatur 5 Minuten lang gerührt. Die Lösung verfärbt sich dabei tief dunkelviolett. Nach Abkühlen auf -50°C wird eine Lösung von 350 mg Zirkoniumtetrachlorid·2THF in 30 ml THF abs. zugetropft. Anschließend wird das Reaktionsgemisch 3 Stunden lang refluxiert. Das Lösungsmittel wird daraufhin im Vakuum abgezogen, der Rückstand in n-Hexan abs. aufgenommen und schlenkfiltriert. Anschließende Kristallisation bei - 18°C erlaubt die Isolierung von 430 mg Produkt (77 % d. Th.).

IR (KBr): 3100w; 2961s; 2930s; 2874m; 1646w; 1609w; 1491w; 1473w; 1460w; 1420w; 1412w; 1378m; 1261s; 1105vs; 1021b,s; 802b,vs; 761w; 490m.
¹H-NMR (CDCl3, TMS): -0.5-2.5 ppm, Methylgruppen, 18 H 9; 3.7-4.7 ppm (Ferrocenteil, 7 H); 6.8-7.6 ppm (Aromatenteil, 4 H).
¹³C-NMR (CDCl3, TMS): -0.25 ppm; -0.20 ppm; 0.38 ppm; 1.0 ppm; 12.6 ppm; 13.1 ppm; 13.9 ppm; 16.0 ppm; 18.2 ppm; 18.6 ppm; 22.9 ppm; 25.5 ppm; 26.5 ppm; 33.3 ppm; 35.0 ppm; 38.0 ppm; 45.0 ppm; 57.8 ppm; 58.8 ppm; 61.0 ppm; 63.5 ppm; 64.8 ppm;68.2 ppm; 69.4 ppm; 69.9 ppm; 70.2 ppm; 91.0 ppm; 91.5 ppm; 119.8 ppm; 119.9 ppm; 120.0 ppm; 123.6 ppm;124.1 ppm; 124.5 ppm; 125.4 ppm;126.6 ppm; 140.5 ppm; 141.5 ppm.
MS (El. 70eV): m/z = 545 (M+. -65 (Cp), <1%); 509 (M+. -101 (CpCl), <1%); 473 (M+. -137 (CpCl2), <1%); 489 (M+. -121 (CpFe), <1%);454 (M+. -156 (CpFeCl), 6%); 369 (M+. -241 (CpFeCp*), 20%); 274 (M+. -336, 100%)

Mikrosonde: C; Fe; Cl; Zr; Si in konsistentem relativen Elementarverhältnis.

### BEISPIEL IX :

### rac-(Ferroceno[2,3]inden-1-yl)dimethylsilylen(fluoren-9-yl)zirkoniumdichlorid

0.26 g (0,948 mmol) Ferroceno[2,3]inden werden in 30 ml THF gelöst, auf -70°C abgekühlt und mit 0,62 ml n-Butyllithium (1.6 M in Hexan, 1,00 mmol) versetzt. Man läßt auf Raumtemperatur kommen und rührt weitere 30 Minuten. Anschließend wird erneut auf -70°C abkühlt und mit einer Spritze 5 ml Dimethyldichlorsilan (41,5 mmol) zugeben. Die Lösung verfärbt sich schlagartig orange. Daraufhin wird alles Lösungsmittel im Vakuum abgezogen, wobei auch überschüssiges Dimethyldichlorsilan entfernt wird. Der Rückstand wird in 30 ml THF gelöst, auf -70°C abgekühlt und mit 5,20 ml Lithiumfluorenid - Lösung (0,2 M in THF, 1,04 mmol) versetzt. Man entfernt das Kältebad und läßt 40 Minuten bei Raumtemperatur rühren. Daraufhin wird abermals auf -70°C abkühlt, 1,25 ml n-Butyllithium (1,6 M in Hexan, 2,0 mmol) zugegeben und wieder auf Raumtemperatur gebracht. Die Lösung verfärbt sich dabei tief dunkelrot. Die Lösung wird nochmals auf -70°C abgekühlt und mit 0,360 g Zirkoniumtetrachlorid·2THF, gelöst in 30 ml THF, versetzt. Nach dem Erwärmen auf Raumtemperatur wird die Lösung 2,5 Stunden unter Rückfluß gekocht und 90 Stunden bei Raumtemperatur gerührt. Das Lösungsmittel wird im Vakuum abgezogen, der Rückstand in n-Hexan gelöst und schlenkfiltriert. Nach dem Entfernen des Lösungsmittels können 260 mg Produkt isoliert werden (42% d. Th.).

IR (KBr): 3392 b,s; 3062w; 2962s; 2925s; 2856m; 1694m;1607m; 1463m; 1449m; 1439m; 1262vs; 1106b,vs; 1021vs; 803vs; 758m; 741m; 556m; 509m; 480m.

¹H-NMR (CDCl₃, TMS): Dimethylsilylengruppen: -0.2 - 0.4 ppm; Ferrocenteil: 4.0 ppm(s, 5 H); 4.05 ppm(d, 1 H); 4.2 ppm("t", 1 H); 4.25 ppm(d, 1 H); Aromatenteil: 6.9 - 7.9 ppm(12 H).
¹³C- NMR (CDCl₃, TMS): Dimethylsilylendomäne: -4.40 ppm; -3.86 ppm; Ferrocendomäne: 69.39 ppm; 69.64 ppm; 69.80 ppm, 70.07 ppm Aromatendomäne: 119.84; 120.23; 120.30; 120.87; 124.40; 124.54; 124.60; 124.77; 125.00; 125.11; 125.61; 125.78; 126.29; 126.51; 126.64; 126.68; 127.39 ppm

### BEISPIEL X

### o,o'-Bis(ferroceno[2,3]inden-1-yl)biphenylenzirkoniumdichlorid

### A) Umsetzung von rac-Ferroceno[2,3]inden-1-on mit Dilithiobiphenyl·TMEDA

0.88 g Dilithiobiphenyl-TMEDA (3.17 mmol) (W. *Neugebauer, A.J. Kos*, *P*. *v. Rague Schleyer*, *J. Organomet*. *Chem, 228*, *107 (1982))* werden in 50 ml THF gelöst und bei T= -70°C mit 1.80 g Ferroceno[2,3]inden-1-on (6.47 mmol), gelöst in 30 ml THF, versetzt. Man erwärmt das Reaktionsgemisch auf Raumtemperatur und gießt schlußendlich auf gesättigte Ammoniumchloridlösung. Nachdem mehrmals mit Diethylether extrahiert wurde, wird der Rückstand nach Entfernen des Lösungsmittels chromatographiert. (Silica G-60, 220-440 mesh, Fluka; nHexan: Diethylether = 80: 20; Säulendimensionen 90x4 cm; Flußrate: 25 ml/min, aufgetragene Menge: jeweils ca. 0.4 g Gemisch). Es können folgende Verbindungen rein erhalten werden:
1. Fraktion: o,o'-Bis(1-hydroxyferroceno[2,3]inden-1-yl)biphenyl, meso Form
   IR(KBr): 3402w; 3056w; 2925w; 1636w; 1493w; 1443w; 1393w; 1332w; 1264s; 1119b,vs; 1106b,vs; 1036vs; 1023vs; 1000s: 955s; 880m; 812b,vs; 749s; 710s; 492m; 477m; 467m; 419w.
   ¹H-NMR (CDCl₃, TMS): 3.15 ppm (m, 2 H), 3.96 ppm (s, 10 H), 4.05 ppm (m, 2 H), 4.11 ppm,(m, 2 H), 6.04 ppm (d, 2 H, J=8 Hz), 6.58-7.60 ppm (m, 14 H), 8.23 ppm (d, 2 H, J=8 Hz)
   ¹³C-NMR (CDCl₃, TMS): 59.85; 62.76; 69.24; 69.91; 91.61; 105.83; 120.19; 124.44 ;125.21; 125.92; 126.11; 126.57; 126.93; 127.12; 127.21; 127.80; 128.72; 129.23; 131.40; 139.32; 139.89; 140.68; 141.21; 155.07 ppm.
   MS (El, 70 eV): m/z= 732.5 (M+·, 1 %), 714.0 (M+. -18, 2 %), 698.0 (M+· -34, 1.5 %), 444.0 (M+· -288, 100 %), 306.0 (M+· -426, 80 %)
2. Fraktion: o,o'-Bis(1-hydroxyferroceno[2,3]inden-1-yl)biphenyl
   IR(KBr): 3500b,w; 2966w; 1607w; 1474w; 1414w; 1260s; 1011vb,vs; 910m; 864s; 789b,vs; 758vs; 700vs; 644m; 612w; 581w; 554m; 506s; 463s.
   ¹H-NMR (CDCl₃, TMS): 3.97 ppm (s, 5 H), 4.14 ppm (s, 5 H), 4.23 ppm (m, 2 H), 4.32 ppm (m, 2 H), 4.58ppm (m, 1 H), 4.63 ppm (m, 1 H), 6.58-6.64 ppm (m), 7.03-7.34 ppm (m).
   ¹³C-NMR (CDCl₃, TMS): 59.54; 59.87; 60.04; 60.26; 65.83; 69.81; 70.03; 82.18; 82.83; 89.82; 90.91; 103.17; 105.41; 119.67 ; 119.95; 120.33; 124.33; 125.48; 126.07; 126.42;126.88; 128.14; 128.29; 131.22; 131.30; 131.79; 138.84; 139.76; 140.44; 141.43 ; 141.89; 142.35; 143.29; 155.25; 155.60; 156.19 ppm.
   MS (El, 70 eV): m/z= 732.5 (M+·, 67 %), 714.0 (M+· -18, 100 %), 698.0 (M+· - 34, 30 %), 455.5 (M+· -277, 33 %), 441.5 (M+· -290, 69 %), 305.5 (M+· -426, 81 %)
3. Fraktion: o,o'-Bis(1-hydroxyferroceno[2,3]inden-1-yl)biphenyl
   IR(KBr): 2965w; 1607w; 1484w; 1432w; 1262s; 1110b,vs; 1019b,vs; 801vs; 758vs; 739vs; 700vs; 609w; 577w; 554W; 506s; 461m; 413m.
   ¹H-NMR (CDCl₃, TMS): 3.92 ppm, (s, 5 H), 4.01 ppm, (s, 1 H), 4.10 ppm, (s, 2 H), 4. 17 ppm, (m, 2 H), 4.19 ppm, (m, 2 H), 4.45 ppm, (m, 1 H), 4.54 ppm, (m, 1 H), 6.52-7.55 ppm, (m, 16 H)
   ¹³C-NMR (CDCl₃, TMS): 59.84 ; 60.09 ; 61.93 ; 69.37 ; 69.59; 70.00; 70.38; 78.43;82.89; 89.62; 90.83; 100.63; 104.98; 119.94; 120.40; 123.14; 124.70; 125.64; 126.10; 127.07; 127.17; 128.01; 128.67; 131.89 ; 141.13 ppm.
   MS (El, 70 eV): m/z= 732.5 (5 %), 714.5 (5 %), 443.5 (35 %), 347.5 (39 %), 305.5 (100%)
   Gesamtausbeute (Fraktion 1-3): 1.63 g (71.5 % d. Th.)
4. Fraktion: Ferroceno[2,3]inden-1-on (50 mg)

### B) Bildung des Dikations

1.63 g o,o'-Bis(1-hydroxyferroceno[2,3]inden-1-yl)biphenyl (Diastereomerengemisch, 2.23 mmol) werden in 50 ml Methylenchlorid gelöst, mit 10 ml Propionsäureanhydrid versetzt und nach Zugabe von 1 ml Tetrafluoroborsäure (54% in Diethylether, 7.30 mmol) 15 Minuten lang gerührt. Das entstandene Dikation wird mit 200 ml Diethylether gefällt und Schlenk-filtriert. Nach dem Trocknen im Hochvakuum konnen 1.90 g (98% d. Th.) o,o'-Bis(ferroceno[2,3,a]coindenium)biphenylditetrafluoroborat isoliert werden.

IR (KBr): 3438 vb,vs; 2925m; 2856m; 1638b,m; 1418w; 1262w; 1084vb,vs; 841 m; 807w; 744w; 520w; 477w.

### C) Reduktion mit Na/Ammoniak

In ca. 100 ml NH₃(I) werden 700 mg Natrium (30 mmol) gelöst. Diese Lösung wird anschließend bei T= -50°C zu einer von 1.90 g des oben beschriebenen Dikations (2.18 mmol) in 50 ml THF zugegeben. Das tief rot gefärbte Reaktionsgemisch wird auf Raumtemperatur gebracht, und nachdem der gesamte Ammoniak verdampft ist, auf gesättigte Ammoniumchloridlösung gegossen und mit Diethylether extrahiert. Gegebenenfalls kann die wässrige Phase mit Essigsäure auf pH=5 gebracht werden. Die vereinigten organischen Phasen werden über Natriumsulfat getrocknet. Der Rückstand wird nach dem Entfernen des Diethylethers flashchromatographiert. (Silica G 60, 220-440 mesh, Fluka, n-Hexan: Diethylether = 75: 25, Säulendimensionen: 3x20 cm). Ausbeute: 1.115 g (73 % d.Th.)

IR (KBr): 3054m; 3018m; 2923m; 1609b,m; 1559w; 1497m; 1476m; 1464m; 1441m; 1295w; 1108vs; 1007b,s; 911s; 803s; 733vs; 650w; 556w; 509m; 481m; 461m; 442m.
- ¹H-NMR (CDCl₃, TMS):: 3.2-5.1 ppm, m, Ferrocenteil
6.2-7.6 ppm, m, Aromatenteil

¹³C-NMR (CDCl₃, TMS): 58.16; 58.35; 58.77; 61.80; 61.89; 62.32; 62.98; 63.49; 69.19; 69.24; 69.3; 69.63; 70.07; 70.20; 76.32; 76.96; 77.17; 77.59; 91.30; 98.96; 118.11; 119.80; 119.97; 120.32; 120.61; 124.77; 125.00; 125.13; 125.37; 125.68; 125.78; 126.16; 126.68; 126.86; 126.99; 127.15; 127.25; 127.34; 128.00; 128.24; 129.08; 129.18; 130.08; 130.21; 130.68; 130.85; 131.11; 139.65; 140.66; 140.85; 141.45; 141.71; 142.21; 150.38; 153.07 ppm.

MS (El, 70 eV): m/z= 596 (15 %), 410 (47 %), 205 (100 %)

### D) o,o'-Bis(ferroceno[2.3.]inden-1-yl)biphenylenzirkoniumdichlorid (Diastereomerengemisch)

342 mg o,o'-Bis(ferroceno[2,3]inden-1-yl)biphenyl (0.489 mmol) werden in 50 ml THF gelöst, auf -50°C gekühlt und mit 0.61 ml n-Butyllithium (1.6 M in Hexan, 0.976 mmol) versetzt. Nach kurzem Erwärmen auf Raumtemperatur werden zur erneut auf - 50°C gekühlten Lösung 250 mg Zirkontetrachlorid·2 THF (0.663 mmol) zugefügt. Das Reaktionsgemisch wird 1 Stunde lang refluxiert. Nach dem Entfernen des Lösungsmittels wird der Rückstand in Diethylether gelöst, Schlenk-filtriert und schließlich im Vakuum eingedampft. Etherische Filtrate können noch Spuren von LiCl enthalten. Auswaage: 416 mg (99% d. Th.).

IR (KBr): 3436b,s; 1634b,s; 1499m; 1476m; 1465m; 1439m; 1295w; 1262vs; 1165w; 1106b,vs; 1019vs; 878w; 803vs; 758vs; 717m; 556m; 509m.

¹H-NMR (CDCl₃, TMS): 3.50-5.1 ppm, m, Ferrocenteil, davon 3.70 ppm, s, 3.76 ppm, s, 6.8-7.6 ppm, m.

¹³C-NMR (CDCl₃, TMS): 58.38; 58.80; 61.92; 62.33; 63.00; 63.53; 69.21; 69.28; 69.34; 69.65; 70.09; 70.22; 98.98; 119.82; 120.00; 120.35; 120.65; 125.04; 125.17; 125.39; 125.48; 125.70; 125.79; 126.18; 126.36; 126.71; 126.90; 127.03; 127.17; 127.28; 127.36 ; 128.26; 129.10; 129.19; 129.36; 130.11; 130.70; 130.89; 131.12; 139.69; 140.68; 140.86; 141.49; 142.22; 150.40; 153.09 ppm.

MS (El, 70 eV): m/z=661 (M+· -198, 100 %), 633 (M+· -226, 10 %), 511 (M+· -348, 14 %)

Elementaranalyse: Fe, Cl, C, Zr in konsistentem Elementarverhältnis.

### Polymerisationsbeispiele:

### Beispiel 1

Ein 2 l Rührreaktor wird nach dem Inertisieren bei Raumtemperatur mit 11,2 g 10%igem MAO (Methylaluminoxan, Fa. Witco, BRD) und 300 g flüssigem Propylen gefüllt und die Mischung 15 Minuten gerührt.
10 mg rac-(Ferroceno[2,3]inden-1-yl)dimethylsilylen(cyclopentadienyl)zirkoniumdichlorid werden in 5,9 ml Toluol gelöst und mit 11,2 g 10%igem MAO gemischt. Anschließend spült man die Katalysatorlösung mit weiteren 200 g Propylen in den Reaktor und heizt den Ansatz auf die Polymerisationstemperatur von 70°C auf, die während einer Zeit von zwei Stunden konstant gehalten wird. Die Reaktion wird durch Flashen des Propylens nach zwei Stunden beendet. Es wurden 151,1 g Polpropylen mit einer Molmasse M_{w} = 6000 g/mol und einer Verteilungsbreite M_{w}/Mₙ= 3,0 erhalten.

### Beispiel 2

Ein 2 l Rührreaktor wird nach dem Inertisieren bei Raumtemperatur mit 3,9 g 10%igem MAO und 500 g flüssigem Propylen gefüllt, die Mischung 15 Minuten gerührt und anschließend auf 70°C aufgeheizt 5 mg Bis(ferroceno[2,3]inden-1-yl) dimethylsilylenzirkoniumdichlorid werden in 10,4 ml Toluol gelöst und mit 3,9 g 10%igem MAO gemischt. Die Katalysatorlösung wird mit Ethylen in den Reaktor gedrückt. Über die Reaktionszeit von 2 Stunden wird ein Ethylenpartialdruck von 2 bar aufrecht erhalten. Die Reaktion wird durch Flashen der Monomeren beendet.
Es wurden 0,8 g eines Ethylen/Propylen-Copolymeren mit einer Molmasse M_{w} = 42000 g/mol und einer Verteilungsbreite M_{w}/Mₙ = 2,8 erhalten. Der Propylengehalt beträgt 37 Mol%.

### Beispiel 3

In einen 2 l-Rührreaktor werden nach der Inertisierung unter Stickstoff 10,8 g 10%iges MAO und 1 dm³ n-Hexan dosiert und 15 Minuten gerührt. Nach Entgasung des Suspensionsmittels und Aufheizen des Reaktors auf die Reaktionstemperatur von 70 °C erfolgt der Polymerisationsstart durch Eindrücken der Katalysatorlösung mit Ethylen. Die Katalysatorlösung wird durch Auflösen von 10 mg rac-(Ferroceno[2,3]inden-1-yl)-dimethylsilylen(tetramethylcyclopentadienyl)zirkoniumdichlorid in 4,7 ml Toluol und Vermischen mit 10,8 g 10%igem MAO hergestellt.
Der Druck im Reaktor wird während der gesamten Polymerisationszeit auf 8 bar durch Nachdosierung des Monomeren konstant gehalten. Die Rührerdrehzahl beträgt 700 Umdrehungen pro Minute, die Polymerisationszeit 2 Stunden.
Es wurden 32 g Polyethylen mit einer Molmasse M_{w} = 672 000 g/mol und eine Verteilungsbreite M_{w}/Mₙ=6,9 erhalten.

### Beispiel 4

In einen 2 l-Rührreaktor werden nach der Inertisierung unter Stickstoff 2,3 g 10%iges MAO und 1 dm³ n-Hexan dosiert und 15 Minuten gerührt. Nach Entgasung des Suspensionsmittels und Aufheizen des Reaktors auf die Reaktionstemperatur von 70 °C erfolgt der Polymerisationsstart durch Eindrücken der Katalysatorlösung mit einem Ethylen/Propylen-Gemisch, welches 11,3 Mol% Propylen enthält. Die Katalysatorlösung wird durch Auflösen von 10 mg rac-(Ferroceno[2,3]inden-1-yl)dimethylsilylen(cyclopentadienyl)zirkoniumdichlorid in 0,9 ml Toluol und Vermischen mit 2,2 g 10%igem MAO hergestellt.
Der Druck im Reaktor wird während der gesamten Polymerisationszeit auf 2,5 bar durch Nachdosierung des Gasgemisches konstant gehalten. Die Rührerdrehzahl beträgt 700 Umdrehungen pro Minute, die Polymerisationszeit 1 Stunde.
Es wurden 33,2 g Ethylen/Propylen-Copolymer mit einer Molmasse M_{w} = 30 000 g/mol und eine Verteilungsbreite M_{w}/Mₙ= 3,7 erhalten. Der Propylengehalt beträgt 1,8 Mol%.

### Beispiel 5

Die Versuchsdurchführung erfolgt analog Beispiel 2. Das vorgelegte Propylen wird mit 10,8 g 10 %igem MAO gerührt. Die Katalysatorlösung wird durch Auflösen von 10 mg rac-(Ferroceno[2,3]inden-1 -yl)dimethylsilylen(tetramethylcyclopentadienyl)zirkoniumdichlorid in 4,7 ml Toluol und Vermischen mit 10,8 g 10%igem MAO hergestellt.

Es wurden 4,0 g eines Ethylen/Propylen-Copolymeren mit einer Molmasse M_{w}=41000 g/mol und einer Verteilungsbreite M_{w}/Mₙ= 8,0 erhalten. Der Propylengehalt beträgt 14,3 Mol%.

### Beispiel 6

Die Versuchsdurchführung erfolgt analog Beispiel 3. Das Hexan wird mit 3,9 g 30%igem MAO gerührt. Die Katalysatorlösung wird durch Auflösen von 5 mg Bis(ferroceno[2,3]inden-1-yl)dimethylsilylenzirkoniumdichlorid in 10,4 ml Toluol und Vermischen mit 3,9 g 10%igem MAO hergestellt.
Es wurden 4,3 g Polyethylen mit einer Molmasse M_{w} = 761 000 g/mol und eine Verteilungsbreite M_{w}/Mₙ= 16,7 erhalten.

### Beispiel 7

Die Versuchsdurchführung erfolgt analog Beispiel 4. Das vorgelegte Hexan wird mit 10,8 g 10 %igem MAO gerührt. Die Katalysatorlösung wird durch Auflösen von 10 mg rac-(Ferroceno[2,3]inden-1-yl)dimethylsilylen(tetramethylcyclopentadienyl)zirkoniumdichlorid in 4,7 ml Toluol und Vermischen mit 10,8 g 10%igem MAO hergestellt.
Es wurden 34,6 g eines Ethylen/Propylen-Copolymeren mit einer Molmasse M_{w}=821000 g/mol und einer Verteilungsbreite M_{w}/Mₙ= 6,3 erhalten. Der Propylengehalt beträgt 1,7 Mol%.

### Beispiel 8

Die Versuchsdurchführung erfolgt analog Beispiel 1. Das vorgelegte Propylen wird mit 10,1 g 10%igem MAO gerührt. Die Katalysatorlösung wird durch Auflösen von 10 mg rac-(Ferroceno[2,3]inden-1-yl)dimethylsilylen(cyclopentadienyl)zirkoniumdichlorid in 5,9 ml Toluol und Vermischen mit 10,1 g 10%igem MAO hergestellt. Die Polymerisationstemperatur beträgt 20 °C.
Es wurden 11,8 g Polypropylen mit einer Molmasse M_{w} = 10 000 g/mol und einer Verteilungsbreite M_{w}/Mₙ = 3,0 erhalten.

### Beispiel 9

Die Versuchsdurchführung erfolgt analog Beispiel 1. Das vorgelegte Propylen wird mit 3,1 g 30%igem MAO gerührt. Die Katalysatorlösung wird durch Auflösen von 10 mg rac-(Ferroceno[2,3]inden-1-yl)dimethylsilylen(2-methylinden-1-yl)hafniumdichlorid in 5,9 ml Toluol und Vermischen mit 3,1 g 10%igem MAO hergestellt.
Es wurden 16,3 g Polypropylen mit einer Molmasse M_{w} = 38 000 g/mol und einer Verteilungsbreite M_{w}/Mₙ = 3,8 erhalten.

### Beispiel 10

Die Versuchsdurchführung erfolgt analog Beispiel 4. Anstelle von Hexan wird 1 dm³ Toluol vorgelegt und mit 1,1 g 10 %igem MAO gerührt. Die Katalysatorlösung wird durch Auflösen von 1 mg rac-(Ferroceno[2,3]inden-1-yl)dimethylsilylen(cyclopentadienyl)zirkoniumdichlorid in 0,45 ml Toluol und Vermischen mit 1,1 g 10%igem MAO hergestellt.
Es wurden 39,3 g eines Ethylen/Propylen-Copolymeren mit einer Molmasse M_{w} = 107 000 g/mol und einer Verteilungsbreite M_{w}/Mₙ= 3,5 erhalten. Der Propylengehalt beträgt 1,7 Mol%.

### Beispiel 11

Die Versuchsdurchführung erfolgt analog Beispiel 3. Das vorgelegte Hexan wird mit 7,5 g 10 %igem MAO gerührt. Die Katalysatorlösung wird durch Auflösen von 10 mg Bis(9-ferrocenylfluorenyl)titandichlorid in 1,3 ml Toluol und Vermischen mit 7,5 g 10%igem MAO hergestellt.
Es wurden 3,0 g Polyethylen mit einer Molmasse M_{w} = 1 196 000 g/mol und eine Verteilungsbreite M_{w}/Mₙ= 24,2 erhalten.

### Beispiel 12

Die Versuchsdurchführung erfolgt analog Beispiel 4. Das vorgelegte Hexan wird mit 3,4 g 30 %igem MAO gerührt. Die Katalysatorlösung wird durch Auflösen von 10 mg rac-(Ferroceno[2,3]inden-1-yl)dimethylsilylen(fluoren-9-yl)zirkoniumdichlorid 5,7 ml Toluol und Vermischen mit 3,3 g 30%igem MAO hergestellt. Der Reaktordruck beträgt 2,4 bar.
Es wurden 5,5 g eines Ethylen/Propylen-Copolymeren mit einer Molmasse M_{w}=205000 g/mol und einer Verteilungsbreite M_{w}/Mₙ= 8,9 erhalten. Der Propylengehalt beträgt 2,1 Mol%.

### Beispiel 13

Die Versuchsdurchführung erfolgt analog Beispiel 4. Das vorgelegte Hexan wird mit 3,9 g 30 %igem MAO gerührt. Die Katalysatorlösung wird durch Auflösen von 10 mg rac-(Ferroceno[2,3]inden-1-yl)dimethylsilylen(t-butylamido)zirkoniumdichlorid in 5 ml Toluol und Vermischen mit 3,9 g 30%igem MAO hergestellt. Der Reaktordruck beträgt 2,4 bar.
Es wurden 2,2 g eines Ethylen/Propylen-Copolymeren mit einer Molmasse M_{w} = 176 000 g/mol und einer Verteilungsbreite M_{w}/Mₙ= 5,3 erhalten. Der Propylengehalt beträgt 1,2 Mol%.

### Beispiel 14

Die Versuchsdurchführung erfolgt analog Beispiel 4. Das vorgelegte Hexan wird mit 2,9 g 30 %igem MAO gerührt. Die Katalysatorlösung wird durch Auflösen von 10 mg rac-(4-Ferrocenylferroceno[2,3]cyclopentadienyl)dimethylsilylen(tetramethylcyclopentadienyl)zirkoniumdichlorid in 7,5 ml Toluol und Vermischen mit 2,9 g 30%igem MAO hergestellt. Der Reaktordruck beträgt 2,4 bar.
Es wurden 14,8 g eines Ethylen/Propylen-Copolymeren mit einer Molmasse M_{w} = 146 000 g/mol und einer Verteilungsbreite M_{w}/Mₙ= 4,6 erhalten. Der Propylengehalt beträgt 0,8 Mol%.

### Beispiel 15

Die Versuchsdurchführung erfolgt analog Beispiel 4. Das vorgelegte Hexan wird mit 2,1 g 30 %igem MAO gerührt. Die Katalysatorlösung wird durch Auflösen von 10 mg Bis(4-ferrocenylferroceno[2,3]cyclopentadienyl)dimethylsilylenzirkoniumdichlorid in 9,6 ml Toluol und Vermischen mit 2,1 g 30%igem MAO hergestellt. Der Reaktordruck beträgt 2,4 bar.
Es wurden 2,4 g eines Ethylen/Propylen-Copolymeren mit einer Molmasse M_{w} = 187 000 g/mol und einer Verteilungsbreite M_{w}/Mₙ= 4,1 erhalten. Der Propylengehalt beträgt 0,4 Mol%.

### Beispiel 16

In einen 2 l-Rührreaktor werden nach der Inertisierung unter Stickstoff 3,9 g 30%iges MAO, 0,5 dm³ n-Hexan und 0,5 dm³ Cyclopenten dosiert und 15 Minuten gerührt. Nach Entgasung der Monomerlösung und Aufheizen des Reaktors auf die Reaktionstemperatur von 70 °C erfolgt der Polymerisationsstart durch Eindrücken der Katalysatorlösung mit Ethylen. Die Katalysatorlösung wird durch Auflösen von 10 mg rac-(Ferroceno[2,3]inden-1-yl)-dimethylsilylen(cyclopentadienyl)zirkoniumdichlorid in 5,1 ml Toluol und Vermischen mit 4,0 g 30%igem MAO hergestellt.
Der Druck im Reaktor wird während der gesamten Polymerisationszeit auf 1 bar durch Nachdosierung des Monomeren konstant gehalten. Die Rührerdrehzahl beträgt 700 Umdrehungen pro Minute, die Polymerisationszeit 2 Stunden.
Es wurden 85,4 g Ethylen/Cyclopenten-Copolymer mit einer Molmasse M_{w} = 16 000 g/mol und eine Verteilungsbreite M_{w}/Mₙ=2,4 erhalten. Der Cyclopentengehalt beträgt 3,2 Mol %.

### Beispiel 17

In einen 2 I-Rührreaktor werden nach der Inertisierung unter Stickstoff 3,9 g 30%iges MAO und 0,5 dm³ Cyclopenten dosiert und 15 Minuten gerührt. Nach Entgasung des Monomeren und Aufheizen des Reaktors auf die Reaktionstemperatur von 70 °C erfolgt der Polymerisationsstart durch Eindrücken der Katalysatorlösung mit Stickstoff. Die Katalysatorlösung wird durch Auflösen von 10 mg rac-(Ferroceno[2,3]inden-1-yl)dimethylsilylen(cyclopentadienyl)zirkoniumdichlorid in 5,2 ml Toluol und Vermischen mit 4,0 g 30%igem MAO hergestellt.
Die Rührerdrehzahl beträgt 700 Umdrehungen pro Minute, die Polymerisationszeit 2 Stunden.
Es wurden 11,8 g Polycyclopenten von wachsartiger Konsistenz erhalten.

### Beispiel 18

Die Versuchsdurchführung erfolgt analog Beispiel 16. Es werden 200 ml Cyclopenten in 800 ml Hexan gelöst und mit 5,7 g 30 % igem MAO gerührt. Danach werden 14,5 mg rac-(Ferroceno[2,3]inden-1-yl)dimethylsilylen(cyclopentadienyl)zirkoniumdichlorid in 8,5 ml Toluol gelöst und mit 5,7 g 30 % igem MAO vermischt. Der Ethylendruck beträgt 2 bar, die Polymerisationstemperatur 30 °C. Es wurden 18,3 g Ethylen/Cyclopenten-Copolymer mit einer Molmasse M_{w} = 771 000 g/mol und eine Verteilungsbreite M_{w}/Mₙ= 3,9 erhalten. Der Cyclopentengehalt beträgt 0,5 Mol %.

### Beispiel 19

In einen 2 I-Rührreaktor werden nach der Inertisierung unter Stickstoff 3,9 g 30 %iges MAO und 0,5 dm³ Cyclopenten dosiert und 15 Minuten gerührt. Nach Entgasung des Monomeren und Aufheizen des Reaktors auf die Reaktionstemperatur von 50 °C erfolgt der Polymerisationsstart durch Eindrücken der Katalysatorlösung mit Ethylen. Die Katalysatorlösung wird durch Auflösen von 10 mg rac-(Ferroceno[2,3]inden-1-yl)-dimethylsilylen(cyclopentadienyl)zirkoniumdichlorid in 4,5 ml Toluol und Vermischen mit 4,0 g 30%igem MAO hergestellt.
Der Druck im Reaktor wird während der gesamten Polymerisationszeit auf 1 bar durch Nachdosierung des Monomeren konstant gehalten. Die Rührerdrehzahl beträgt 700 Umdrehungen pro Minute, die Polymerisationszeit 0,5 Stunden.
Es wurden 97,4 g Ethylen/Cyclopenten-Copolymer mit einer Molmasse M_{w} = 29 000 g/mol und eine Verteilungsbreite M_{w}/Mₙ=2,4 erhalten. Der Cyclopentengehalt beträgt 3,4 Mol %.

### Beispiel 20

Die Versuchsdurchführung erfolgt analog Beispiel 19. Es werden 4,0 g 30 % iges MAO im Cyclopenten gelöst. Die Katalysatorlösung besteht aus 10 mg rac-(Ferroceno[2,3]inden-1-yl)dimethylsilylen(cyclopentadienyl)zirkoniumdichlorid 4,5 ml Toluol und 3,9 g 30 % igem MAO. Die Polymerisationszeit beträgt 2 Stunden.
Es wurden 60,8 g Ethylen/Cyclopenten-Copolymer mit einer Molmasse M_{w} = 000 g/mol und eine Verteilungsbreite M_{w}/Mₙ= 2,0 erhalten. Der Cyclopentengehalt beträgt 35 Mol %.

### Beispiel 21

Die Versuchsdurchführung erfolgt analog Beispiel 19. Es werden 1 g 10 % iges MAO im Cyclopenten gelöst. Die Katalysatorlösung besteht aus 2 mg rac-(Ferroceno[2,3]inden-1-yl)dimethylsilylen(cyclopentadienyl)zirkoniumdichlorid 0,9 ml Toluol und 1g 10% igem MAO. Die Polymerisationszeit beträgt 2 Stunden.
Es wurden 6,1 g Ethylen/Cyclopenten-Copolymer mit einer Molmasse M_{w} = 32 000 g/mol und eine Verteilungsbreite M_{w}/Mₙ= 4,0 erhalten. Der Cyclopentengehalt beträgt 2,6 Mol %.

### Beispiel 22

Die Versuchsdurchführung erfolgt analog Beispiel 19. Es werden 5 g 10 % iges MAO im Cyclopenten gelöst. Die Katalysatorlösung besteht aus 2 mg rac-(Ferroceno[2,3]inden-1-yl)dimethylsilylen(cyclopentadienyl)zirkoniumdichlorid 0,9 ml Toluol und 4,9 g 10% igem MAO. Die Polymerisationszeit beträgt 2 Stunden.
Es wurden 81,9 g Ethylen/Cyclopenten-Copolymer mit einer Molmasse M_{w} = 37 000 g/mol und eine Verteilungsbreite M_{w}/Mₙ= 2,3 erhalten. Der Cyclopentengehalt beträgt 2,6 Mol %.

### Beispiel 23

Die Versuchsdurchführung erfolgt anlaog Beispiel 1. Das vorgelegte Propylen wird mit 23,4 g 30 %igem MAO gerührt. Die Katalysatorlösung wird durch Auflösen von 92 mg o,o'-Bis(ferrocenol[2,3]inden-1-yl)biphenylenzirkoniumdichlorid in 40 ml Toluol und Vermischen mit 23,4 g 30 %igem MAO hergestellt. Die Polymerisationstemperatur beträgt 50°C.
Es wurden 75,2 g Polypropylen mit einer Molmasse M_{w}= 37 000 g/mol und einer Verteilungsbreite M_{w}/Mₙ = 3,4 erhalten.

## Patentansprüche

1. Metallocen der Formel I 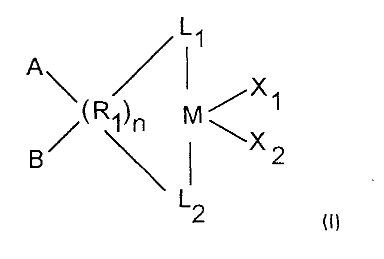 worin
M ein Metall der Gruppe Ti, Zr, Hf, V, Nb, Ta oder ein Element aus der Gruppe der Lanthaniden ist,
X₁ und X₂ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀ -Alkenylgruppe, eine C₇ - C₂₀- Arylalkylgruppe, eine C₇ - C₂₀-Alkylarylgruppe, eine C₈ - C₂₀ - Arylalkenylgruppe, Wasserstoff oder ein Halogenatom bedeuten,
L₁ und L₂
a) gleich oder verschieden sind und einen gegebenenfalls ein- oder mehrfach substituierten ein- oder mehrkernigen Kohlenwasserstoffrest mit wenigstens einer Cyclopentadienyl- Einheit bedeuten, welcher mit M eine Sandwichstruktur bilden kann, wobei L₁ und / oder L₂ mit einem oder mehreren substituierten oder unsubstituierten Ferrocen- bzw. Ruthenocenresten substituiert und/oder kondensiert ist, wobei die Substituenten die gleiche Bedeutung wie X₁ und X₂ haben können oder einen Ferrocen- oder Ruthenocenrest darstellen, oder
b) L₁ einen gegebenenfalls ein- oder mehrfach substituierten ein- oder mehrkernigen Kohlenwasserstoffrest mit wenigstens einer Cyclopentadienyl-Einheit bedeutet, welcher mit M eine Sandwichstruktur bilden kann und der mit einem oder mehreren substituierten oder unsubstituierten Ferrocen- bzw. Ruthenocenresten substituiert und/oder kondensiert ist, wobei die Substituenten die gleiche Bedeutung wie X₁ und X₂ haben oder einen Ferrocen- oder Ruthenocenrest darstellen und L₂ ein Amido-, Phosphido- oder Arsenidorest der Formel
E―D<
ist, in der D Stickstoff, Phosphor oder Arsen bedeuten und E die Bedeutung von X₁ und X₂ hat,
R₁ Kohlenstoff, Silizium, Germanium und Zinn, oder das gesamte Brückenglied A(R₁)ₙB ein unsubstituierter oder mit A und/oder B substituierter Biphenylen-Rest sein kann,
A und B die Bedeutung von X₁ und X₂ haben und
n im Falle von Kohlenstoff für eine ganze Zahl von 0 bis 4 und im Falle von Silizium, Germanium und Zinn für 0 oder 1 steht, wobei für den Fall, daß n = 0 ist, die freien Valenzen an L₁ und L₂ durch einen Rest X₁ oder X₂ substituiert sind, mit der Auflage, daß für den Fall, daß L₂ einen Amido-, Phosphido- oder Arsenidorest darstellt, n ungleich Null ist.

2. Metallocene gemäß Anspruch 1, dadurch gekennzeichnet, daß L₁ Ferroceno[2,3]inden-1-yl, Ferroceno[2,3]cyclopentadien-1-yl, 4-Ferrocenylferroceno-[2,3] cyclopentadien-1-yl, oder 9-Ferrocenylfluorenyl bedeutet und L₂ die gleiche Bedeutung haben kann oder Cyclopentadienyl, Tetramethylcyclopentadienyl, Inden-1-yl, 2-Methylinden-1-yl, Fluorenyl ist.

3. Metallocene gemäß Anspruch 1 oder 2, dadurch gekennzeichnet, daß es sich um Bis(ferroceno[2,3]inden-1-yl)dimethylsilylenzirkoniumdichlorid, rac-(Ferroceno[2,3]inden-1-yl)dimethylsilylen(tetramethylcyclopentadienyl)zirkoniumdichlorid, rac(Ferroceno[2,3]inden-1-yl)dimethylsilylen(cyclopentadienyl)zirkoniumdichlorid,rac(Ferroceno[2,3]inden-1-yl)dimethylsilylen(2-methylinden-1-yl)hafniumdichlorid, rac(Ferroceno[2,3]inden-1-yl)-dimethylsilylen(fluoren-9-yl)zirkoniumdichlorid, rac(Ferroceno[2,3]inden-1-yl)dimethylsilylen(t-butylamido)zirkonium dichlorid, rac(4-Ferrocenylferroceno[2,3]cyclopentadienyl)dimethylsilylen (tetramethylcyclopentadienyl)zirkoniumdichlorid, Bis(4-ferrocenylferroceno [2,3]cyclopentadienyl)dimethylsilylenzirkoniumdichlorid und Bis(9-ferrocenylfluorenyl)titaniumdichlorid und o,o'-Bis(ferroceno[2,3]inden-1-yl)biphenylenzirkoniumdichlorid handelt.

4. Verfahren zur Herstellung von Metallocenen der Formel I gemäß einem der Ansprüche 1 bis 3, dadurch gekennzeichnet, daß man eine Verbindung der Formel II 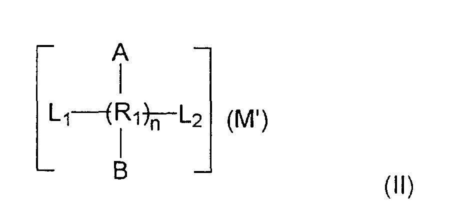 mit einer Verbindung der Formel III
M(X')₂ X₁ X₂ (III)
umsetzt, wobei L₁, L₂, A, B, R₁, bzw. das Brückenglied A (R₁)ₙB, M, X₁, X₂ und n die in Anspruch 1 angeführte Bedeutung haben, M' ein Alkalimetall und X' ein Halogenatom bedeuten.

5. Verwendung von Metallocenen gemäß einem der Ansprüche 1 bis 3 als Polymerisationskatalysatoren bei der Polymerisation von Olefinen.

6. Verfahren zur Herstellung von Polyolefinen durch Polymerisation von Olefinen, dadurch gekennzeichnet, daß als Katalysatoren Metallocene gemäß einem der Ansprüche 1 bis 4 eingesetzt werden.

7. Verfahren zur Herstellung von Polyolefinen gemäß Anspruch 6, dadurch gekennzeichnet, daß zusätzlich zu den Metallocenen Aluminoxane als Cokatalysatoren eingesetzt werden.

## Claims

1. Metallocene of formula I 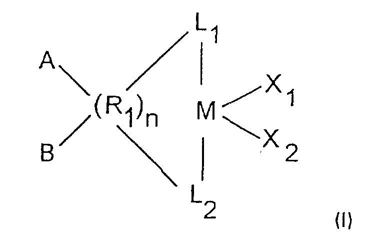 wherein
M is a metal of group Ti, Zr, Hf, V, Nb, Ta or an element selected from the lanthanides,
X₁ and X₂ may be identical or different and denote a C₁₋₁₀-alkyl group, a C₁₋₁₀-alkoxy group, a C₆₋₁₀-aryl group, a C₆₋₁₀-aryloxy group, a C₂₋₁₀-alkenyl group, a C₇₋₂₀-arylalkyl group, a C₇₋₂₀-alkylaryl group, a C₈₋₂₀-arylalkenyl group, hydrogen or a halogen atom,
L₁ and L₂
a) may be identical or different and denote an optionally mono- or polysubstituted mono- or polynuclear hydrocarbon group having at least one cyclopentadienyl unit, which is capable of forming a sandwich structure with M, whilst L₁ and/or L₂ is substituted and/or condensed with one or more substituted or unsubstituted ferrocene or ruthenocene groups, while the substituents may have the same meanings as X₁ and X₂ or denote a ferrocene or ruthenocene group, or
b) L₁ denotes an optionally mono- or polysubstituted mono- or polynuclear hydrocarbon group having at least one cyclopentadienyl unit which may form a sandwich structure with M and which is substituted and/or condensed with one or more substituted or unsubstituted ferrocene or ruthenocene groups, wherein the substituents may have the same meaning as X₁ and X₂ or denote a ferrocene or ruthenocene group and L₂ is an amido, phosphido or arsenido group of formula
E―D<
wherein D denotes nitrogen, phosphorus or arsenic and E has the meaning of X₁ and X₂,
R₁ denotes carbon, silicon, germanium and tin, or the entire bridge member A(R₁)ₙB may be an unsubstituted biphenylene group or a biphenylene group substituted with A and/or B,
A and B have the same meanings as X₁ and X₂ and
n denotes an integer from 0 to 4, in the case of carbon, or denotes 0 or 1 in the case of silicon, germanium and tin, whilst if n = 0 the free valencies at L₁ and L₂ are substituted by a group X₁ or X₂, with the proviso that if L₂ denotes an amido, phosphido or arsenido group, n does not represent zero.

2. Metallocenes according to claim 1, characterised in that L₁ denotes ferroceno[2,3]inden-1-yl, ferroceno[2,3]cyclopentadien-1-yl, 4-ferrocenyl-ferroceno[2,3]cyclopentadien-1-yl, or 9-ferrocenyl-fluorenyl and L₂ may have the same meaning or denotes cyclopentadienyl, tetramethylcyclopentadienyl inden-1-yl, 2-methylinden-1-yl or fluorenyl.

3. Metallocene according to claim 1 or 2, characterised in that it is bis(ferroceno[2,3]inden-1-yl)dimethylsilylene zirconium dichloride, rac-(ferroceno[2,3]inden-1-yl)dimethylsilylene-(tetramethylcyclopentadienyl)zirconium dichloride, rac(ferroceno[2,3]inden-1-yl)dimethylsilylene-(cyclopentadienyl)zirconium dichloride, rac(ferroceno[2,3]inden-1-yl)dimethylsilylene(2-methylinden-1-yl)hafnium dichloride, rac(ferroceno[2,3]inden-1-yl)-dimethylsilylene(fluoren-9-yl)zirconium dichloride, rac(ferroceno[2,3]inden-1-yl)dimethylsilylene(t-butylamido)zirconium dichloride, rac(4-ferrocenylferroceno[2,3]cyclopentadienyl)dimethylsilylene(tetramethylcyclopentadienyl)zirconium dichloride, bis(4-ferrocenylferroceno[2,3]-cyclopentadienyl)dimethylsilylene zirconium dichloride and bis(9-ferrocenylfluorenyl)titanium dichloride and o,o'-bis(ferroceno[2,3]inden-l-yl)biphenylene zirconium dichloride.

4. Process for preparing metallocenes of formula I according to one of claims 1 to 3, characterised in that a compound of formula II 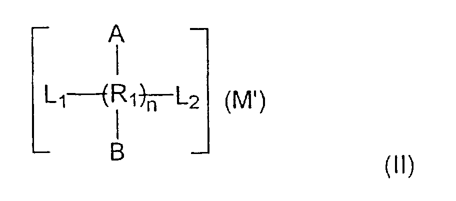 is reacted with a compound of formula III
M(X')₂ X₁ X₂ (III)
wherein L₁, L₂, A, B, R₁ or the bridge member A(R₁)ₙB, M, X₁, X₂ and n have the meanings given in claim 1, M' denotes an alkali metal and X' denotes a halogen atom.

5. Use of metallocenes according to one of claims 1 to 3 as polymerisation catalysts in the polymerisation of olefins.

6. Process for preparing polyolefins by polymerisation of olefins, characterised in that metallocenes according to one of claims 1 to 4 are used as catalysts.

7. Process for preparing polyolefins according to claim 6, characterised in that in addition to the metallocenes aluminoxanes are used as co-catalysts.

## Revendications

1. Métallocène de formule I 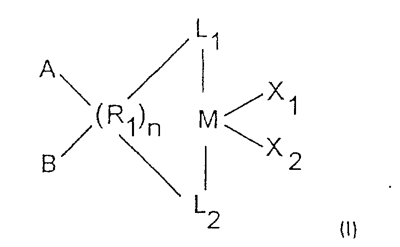 dans laquelle
M représente un métal du groupe Ti, Zr, Hf, V, Nb, Ta ou un élément choisi dans le groupe des lanthanides,
X₁ et X₂ sont identiques ou différents, et représentent un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₂₀, un groupe alkylaryle en C₇-C₂₀, un groupe arylalcényle en C₈-C₂₀, un atome d'hydrogène ou d'halogène,
L₁et L₂
a) sont identiques ou différents, et représentent un radical hydrocarboné mono- ou polynucléaire, une ou plusieurs fois substitué, comportant au moins un fragment cyclopentadiényle, qui peut former avec M une structure en sandwich, L₁ et/ou L₂ étant condensé(s) avec ou substitué(s) par un ou plusieurs radicaux ferrocène ou ruthénocène substitués ou non substitués, les substituants pouvant avoir la même signification que X₁ et X₂ ou représentant un radical ferrocène ou ruthénocène, ou
b) L₁ représente un radical hydrocarboné mono- ou polynucléaire éventuellement une ou plusieurs fois substitué, comportant au moins un fragment cyclopentadiényle, qui peut former avec M une structure en sandwich et qui est condensé avec ou substitué par un ou plusieurs radicaux ferrocène ou ruthénocène substitués ou non substitués, les substituants pouvant avoir la même signification que X₁ et X₂ ou représentant un radical ferrocène ou ruthénocène, et L₂ représente un radical amido, phosphido ou arsénido de formule
E―D〈
dans laquelle D représente un atome d'azote, de phosphore ou d'arsenic et E a la signification de X₁et X₂,
R₁ représente un atome de carbone, silicium, germanium ou étain, ou bien le chaînon pontant A(R₁)ₙB dans son ensemble peut être un radical biphénylène non substitué ou substitué par A et/ou B,
A et B ont les significations de X₁ et X₂, et
n représente, dans le cas du carbone, un nombre entier allant de 0 à 4, et dans le cas du silicium, du germanium et de l'étain, 0 ou 1, pour le cas où n = 0, les valences libres de L₁et L₂ étant substituées par un radical X₁ ou X₂, étant entendu que dans le cas où L₂ représente un radical amido, phosphido ou arsénido, n est différent de zéro.

2. Métallocènes selon la revendication 1, caractérisés en ce que L₁ représente le groupe ferrocéno[2,3]indén-1-yle, ferrocéno[2,3]cyclopentadién-1-yle, 4-ferrocénylferrocéno[2,3]cyclopentadién-1-yle ou 9-ferrocénylfluorényle, et L₂ peut avoir la même signification ou est le groupe cyclopentadiényle, tétra-méthylcyclopentadiényle, indén-1-yle, 2-méthylindén-1-yle, fluorényle.

3. Métallocènes selon la revendication 1 ou 2, caractérisés en ce qu'il s'agit du dichlorure de bis(ferrocéno[2,3]indén-1-yl)diméthylsilylènezirconium, du dichlorure de rac(ferrocéno[2,3]indén-1-yl)diméthylsilylène(tétraméthylcyclopentadiényl)zirconium, du dichlorure de rac(ferrocéno[2, 3]indén-1-yl)diméthylsilylène(cyclopentadiényl)zirconium, du dichlorure de rac(ferrocéno[2,3]-indén-1-yl)diméthylsilylène(2-méthylindén-1-yl)hafnium, du dichlorure de rac(ferrocéno[2,3]indén-1-yl)diméthylsilylène(fluorén-9-yl)zirconium, du dichlorure de rac(ferrocéno[2,3]indén-1-yl)diméthylsilylène(tert-butylamido)zirconium, du dichlorure de rac(4-ferrocénylferrocéno[2,3]cyclopentadiényl)diméthylsilylène(tétraméthylcyclopentadiényl)zirconium, du dichlorure de bis(4-ferrocénylferrocéno[2,3]cyclopentadiényl)diméthylsilylènezirconium et du dichlorure de bis(9-ferrocénylfluorényl)titanium et du dichlorure de o,o'-bis(ferrocéno-[2,3]indén-1-yl)biphénylènezirconium.

4. Procédé pour la préparation des métallocènes de formule I selon l'une des revendications 1 à 3, caractérisé en ce qu'on fait réagir un composé de formule Il 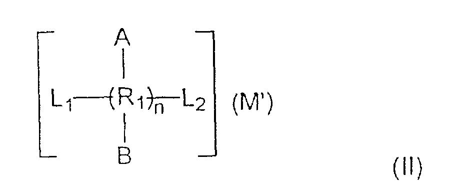 avec un composé de formule III
M(X')₂X₁X₂ (III)
dans laquelle L₁, L₂, A, B, R₁ ou le chaînon pontant A(R₁)ₘB, M, X₁, X₂ et n ont les significations données dans la revendication 1, M' représente un métal alcalin et X' représente un atome d'halogène.

5. Utilisation de métallocènes selon l'une des revendications 1 à 3, en tant que catalyseurs de polymérisation dans la polymérisation d'oléfines

6. Procédé pour la production de polyoléfines par polymérisation d'oléfines, caractérisé en ce qu'on utilise comme catalyseurs des métallocènes selon l'une des revendications 1 à 4.

7. Procédé pour la production de polyoléfines selon la revendication 6, caractérisé en ce qu'en plus des métallocènes on utilise des aluminoxanes en tant que co-catalyseurs
